(19) Europäisches Patentamt / European Patent Office / Office européen des brevets

(11) **EP 4 229 543 B1**

(12) **FASCICULE DE BREVET EUROPEEN**

(45) Date de publication et mention de la délivrance du brevet:
**30.10.2024 Bulletin 2024/44**

(21) Numéro de dépôt: **21782680.9**

(22) Date de dépôt: **21.09.2021**

(51) Classification Internationale des Brevets (IPC):
*G06N 3/0455* (2023.01)  *G06N 3/0464* (2023.01)
*G06F 18/2413* (2023.01)  *G06V 30/40* (2022.01)
*G06V 10/44* (2022.01)  *G06N 3/088* (2023.01)

(52) Classification Coopérative des Brevets (CPC):
**G06F 18/24133; G06N 3/0455; G06N 3/0464; G06V 10/454; G06V 30/40;** G06N 3/088

(86) Numéro de dépôt international:
**PCT/EP2021/075910**

(87) Numéro de publication internationale:
**WO 2022/078722 (21.04.2022 Gazette 2022/16)**

(54) **RESEAU NEURONAL ET PROCEDE DE TRAITEMENT D'IMAGE, D'EXTRACTION ET DE RECOMBINAISON AUTOMATIQUE D'INFORMATIONS**

NEURONALES NETZWERK UND VERFAHREN ZUR BILDVERARBEITUNG, EXTRAKTION UND AUTOMATISCHEN INFORMATIONSREKOMBINATION

NEURAL NETWORK AND METHOD FOR IMAGE PROCESSING, EXTRACTION AND AUTOMATIC INFORMATION RECOMBINATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.10.2020 FR 2010541**

(43) Date de publication de la demande:
**23.08.2023 Bulletin 2023/34**

(73) Titulaire: **Dilitrust**
**92081 Paris (FR)**

(72) Inventeurs:
• **CHEKROUN, Raphaël**
**92200 NEUILLY SUR SEINE (FR)**
• **DE LA CLERGERIE, Eric**
**78160 MARLY LE ROI (FR)**

(74) Mandataire: **Rataboul, Xavier**
**Cabinet Benech**
**15, rue d'Astorg**
**75008 Paris (FR)**

(56) Documents cités:
• **MARTÍNEK JIRÍ ET AL: "Building an efficient OCR system for historical documents with little training data", NEURAL COMPUTING AND APPLICATIONS, vol. 32, no. 23, 9 May 2020 (2020-05-09), pages 17209 - 17227, XP037405362, ISSN: 0941-0643, DOI: 10.1007/S00521-020-04910-X**
• **SCHREIBER SEBASTIAN ET AL: "DeepDeSRT: Deep Learning for Detection and Structure Recognition of Tables in Document Images", 2017 14TH IAPR INTERNATIONAL CONFERENCE ON DOCUMENT ANALYSIS AND RECOGNITION (ICDAR), IEEE, vol. 1, 9 November 2017 (2017-11-09), pages 1162 - 1167, XP033307919, DOI: 10.1109/ICDAR.2017.192**

**Description**

L'invention se rapporte à un réseau neuronal et à un procédé de traitement d'image, d'extraction et de recombinaison d'informations, en particulier pour la segmentation sémantique d'un document de texte complexe. L'invention concerne également des dispositifs programmables pour mettre en oeuvre ledit procédé. Le document MARTÍNEK JIRÍ ET AL: "Building an efficient OCR system for historical documents with little training data",NEURAL COMPUTING AND APPLICATIONS, vol. 32, no. 23, 9 mai 2020 (2020-05-09), pages 17209-17227, décrit une intelligence artificielle supportant un système OCR pour des textes historiques.

Les entreprises reçoivent de plus en plus de documents de textes par voie postale ou par voie électronique et ont besoin de pouvoir les traiter le plus rapidement possible.

Ce traitement peut consister à permettre un archivage automatique en fonction du type de document et/ou une indexation en fonction du contenu des documents, à retransmettre automatiquement ces documents à différents destinataires en fonction du type et/ou du contenu des documents, ou à fournir automatiquement à un utilisateur un corpus de documents archivés et sélectionnés en fonction d'une requête de sélection faite par l'utilisateur sur la base des différents types d'objets indexés.

Le traitement nécessite donc une analyse du contenu du document : les termes employés et leur contexte, les idées développées, une structure logique, puis une indexation des différents éléments du document en fonction de types d'objets que l'on recherche.

Cette analyse est classiquement faite par des êtres humains qui peuvent ensuite, archiver et classer les documents en fonction du contenu sémantique. Par exemple, après analyse du document, il est possible de renseigner manuellement dans un logiciel de gestion de documents (par exemple de contrats) : le logo et nom de l'entreprise émettrice, le destinataire et son adresse, le titre général du document, les titres des différents paragraphes, les paragraphes, les dates liées à tel ou tel paragraphe, la date de signature et si le contrat a bien été signé en identifiant la présence de signatures.

Compte tenu du nombre de documents à traiter et de leur complexité, il est nécessaire de proposer un procédé et un dispositif de traitement automatique de ces documents pour permettre leur analyse, leur archivage, leur indexage et leur consultation.

Par document de texte, on entend des documents constitués essentiellement, mais non nécessairement exclusivement, de texte. En d'autres termes, les documents texte comprennent majoritairement du texte, mais ils peuvent également comprendre quelques images (logo, signature), des tableaux, des dates, etc.

Par document de texte complexe, on entend des documents texte structurés, c'est-à-dire comprenant des parties et/ou des formes distinctes. Ce texte peut être sous forme de paragraphes, agencés en une ou plusieurs colonnes, et comprendre également des titres, des dates, des tableaux de texte ou de chiffres, des images telles que des logos comprenant ou non du texte, etc.

Par exemple, il peut s'agir de contrats juridiques, de documents administratifs, des conditions générales de ventes, des rapports d'intervention, des décisions de justice, des documents de brevet, des articles scientifiques, des thèses.

Les procédés classiques permettant un traitement automatique des documents pour permettre leur analyse, leur archivage et leur consultation consistent à scanner le document pour obtenir une image du document, puis à réaliser une reconnaissance optique de caractère ou OCR (pour optical character recognition en anglais) à l'aide d'un logiciel de traitement d'image spécialisé, et permettant d'obtenir un fichier texte numérique.

Une fois ce fichier obtenu, il est possible d'analyser le texte de ce fichier pour en extraire de l'information à l'aide de logiciels d'analyse sémantique par exemple. Le résultat de cette analyse permet, par exemple, d'indexer le document en fonction de certains mots. En d'autres termes, une fois le document reçu, scanné, transformé en texte numérique et indexé, il est possible, dans le logiciel de gestion de données, de rechercher et d'obtenir tous les documents comprenant tel ou tel mot ou répondant à telle ou telle requête.

Cependant, pour que l'analyse sémantique et l'indexation soient efficaces, il est essentiel, en premier lieu, que l'étape d'OCR soit la plus efficace possible, c'est-à-dire que les mots aient tous été reconnus sans erreur.

La tendance actuelle consiste donc à chercher toutes les solutions permettant d'améliorer la qualité du logiciel d'OCR.

L'idée qui sous-tend l'invention est radicalement différente.

Ainsi, l'invention propose de réaliser une OCR avec un logiciel classique, puis de combiner une analyse du texte obtenu par l'OCR avec une analyse topologique de l'image du texte par un réseau de neurones organisé sous la forme d'un bi-encodeur effectuant en parallèle deux cascades, c'est-à-dire de successions, de convolutions différentes, suivi d'un décodeur effectuant une cascade de déconvolutions.

Contre toute attente, les résultats obtenus en sortie sont beaucoup plus précis que ceux qui sont obtenus par les meilleurs logiciels d'analyse sémantique et permettent, en outre, une indexation ultérieure beaucoup plus pertinente, car comprenant des informations de géolocalisation des termes dans le document, le tout dans un temps de traitement très court. En d'autres termes, alors même que le logiciel d'OCR lui-même n'est pas modifié, les résultats obtenus par le procédé selon l'invention sont plus précis, car il enrichit le document en identifiant et typant des zones du document, telles qu'une zone de signature, ou un tableau, des paragraphes, des titres, etc. Ainsi, les résultats obtenus par le procédé selon l'invention contiennent plus d'informations (informations contextuelles et de géolocalisation) qui permettent une meilleure indexation du contenu du document ainsi que des traitements spécifiques pour les zones ainsi identifiées. Plus précisément, ils permettent une analyse sémantique et une indexation beaucoup plus efficace et fine, ce qui permet de faire des filtres de recherche qui étaient impossibles auparavant, comme par exemple, extraire du texte la date de signature ou la date de renouvellement d'un contrat.

L'invention a plus précisément pour objet un réseau neuronal multimodal de segmentation sémantique d'un document de texte complexe à traiter, le réseau neuronal comprenant :

- une première chaîne neuronale multicouche d'encodage d'un fichier image initial du document à traiter de dimension initiale déterminée, la première chaîne neuronale d'encodage ayant une entrée recevant le fichier image numérique initial du document à traiter, une pluralité de couches de calcul générant des fichiers de dimensions déterminées, et une sortie ,
- une deuxième chaîne neuronale multicouche d'encodage d'un fichier image masque du document à traiter de dimension initiale déterminée généré à l'issue d'une opération de segmentation effectuée sur un fichier texte obtenu par reconnaissance de caractère du fichier image du document à traiter, l'opération de segmentation comprenant en outre l'assignation à chaque mot du fichier texte numérique d'un type d'objet choisi dans la liste prédéfinie de types d'objet et le remplacement de chaque mot par une zone de valeur correspondant au type d'objet assigné audit mot, la deuxième chaîne neuronale d'encodage ayant une entrée recevant le fichier image masque, une pluralité de couches de calcul générant des fichiers de dimensions déterminées, et une sortie
- une chaîne neuronale multicouche de décodage connectée à la sortie de la première chaîne neuronale multicouche d'encodage et à la sortie de la deuxième chaîne neuronale multicouche d'encodage, et comprenant une pluralité de couches de calcul générant des fichiers de dimensions déterminées ;
- un premier pont de connexions résiduelles parallèles entre les couches de la première chaîne neuronale multicouche d'encodage et les couches de la chaîne neuronale multicouche de décodage,
- un deuxième pont de connexions résiduelles parallèles entre les couches de la deuxième chaîne neuronale multicouche d'encodage et les couches de la chaîne neuronale multicouche de décodage, les connexions résiduelles parallèles des premier et deuxième ponts de connexions résiduelles générant des fichiers de même dimension étant reliées après une couche de la chaîne neuronale multicouche de décodage générant un fichier image masque de segmentation sémantique constitué de pixels codés en valeurs, chaque valeur correspondant à un type d'objet de la liste prédéfinie, le fichier image masque de segmentation sémantique étant de même dimension que le fichier image numérique initial.

Selon des formes de réalisation particulières qui peuvent être combinées entre elles :

- dans le réseau neuronal selon l'invention :

  - la première chaîne neuronale multicouche d'encodage peut comprendre au moins N blocs de calcul d'encodage successifs liés entre eux par une connexion principale, N étant un entier compris entre 2 et 8, les blocs de calcul d'encodage de rang 1 à N-1 comprenant en outre chacun une connexion résiduelle de sortie de données résiduelles, chacun des N blocs de calcul d'encodage exécutant au moins une convolution et au moins une opération de sous-échantillonnage, de telle sorte que :

    * lorsque le bloc de calcul d'encodage de rang 1 reçoit un fichier de dimension initiale déterminée, il génère un fichier de dimension de rang 1 inférieure à la dimension initiale déterminée ; et que
    * lorsqu'un bloc de calcul d'encodage de rang i, i étant un entier compris entre 2 et N, reçoit par la connexion principale avec le bloc de calcul d'encodage de rang précédent i-1, un fichier de dimension de rang précédent i-1, il génère un fichier de rang i avec une dimension de rang i inférieure à la dimension de rang précédent i-1 du fichier reçu du bloc de calcul d'encodage de rang précédent i-1, ;

  - la deuxième chaîne neuronale multicouche d'encodage, parallèle à la première chaîne neuronale multicouche d'encodage, peut comprendre un même nombre N de blocs de calcul d'encodage successifs que la première chaîne neuronale multicouche d'encodage comprend de blocs de calcul d'encodage, les N blocs de calcul d'encodage successifs de la deuxième chaîne neuronale multicouche d'encodage étant liés entre eux par une connexion principale, les blocs de calcul d'encodage de rang 1 à N-1 comprenant en outre chacun une connexion résiduelle de sortie de données résiduelles, chacun des N blocs de calcul d'encodage exécutant au moins une convolution et au moins une opération de sous-échantillonnage, de telle sorte que :

    * le bloc de calcul d'encodage de rang 1 reçoit un fichier de dimension initiale déterminée et génère un fichier de dimension de rang 1 inférieure à la dimension initiale déterminée ; et
    * qu'un bloc de calcul d'encodage de rang i, i étant un entier compris entre 2 et N, reçoit par la connexion principale avec le bloc de calcul d'encodage de rang précédent i-1 un fichier de dimension de rang précédent i-1 et génère un fichier de rang i avec une dimension de rang i inférieure à la dimension de rang précédent i-1 du fichier reçu du bloc de calcul d'encodage de rang précédent i-1 ; et dans lequel

- la chaîne neuronale multicouche de décodage peut comprendre un même nombre N de blocs de calcul de décodage successifs que la première chaîne neuronale multicouche d'encodage comprend de blocs de calcul d'encodage, les N blocs de calcul de décodage étant liés entre eux par une connexion principale, chaque bloc de calcul de décodage comprenant un sous-bloc de fusion exécutant au moins une fusion de fichiers de dimensions identiques, suivi d'un sous-bloc de déconvolution exécutant au moins une déconvolution des fichiers fusionnés par le sous-bloc de fusion, les blocs de calcul de décodage étant reliés aux blocs de calcul de codage de la première et de la deuxième chaîne neuronale multicouche d'encodage de telle sorte que :

    * le sous-bloc de fusion du bloc de calcul de décodage de rang 1 reçoit les fichiers générés par les blocs de calcul d'encodage de rang N de la première et de la deuxième chaîne neuronale multicouche d'encodage ;
    * le sous-bloc de fusion du bloc de calcul de décodage de rang i, pour i compris entre 2 et N, reçoit les fichiers générés par le sous-bloc de déconvolution du bloc de calcul de décodage de rang i-1, ainsi que des données résiduelles provenant de la connexion résiduelle de sortie du bloc de calcul d'encodage de rang N-(i-1) de la première et de la deuxième chaîne neuronale multicouche d'encodage.

• la première et de la deuxième chaîne neuronale multicouche d'encodage peuvent comprendre chacune un premier et un deuxième blocs de calcul d'encodage effectuant chacun deux convolutions et une opération de sous-échantillonnage, et un troisième et un quatrième bloc de calcul d'encodage effectuant chacun trois convolutions et une opération de sous-échantillonnage ;
• la chaîne neuronale multicouche de décodage peut comprendre un premier, un deuxième et un troisième blocs de calcul de décodage munis chacun un sous-bloc de déconvolution effectuant une déconvolution, ainsi qu'un quatrième bloc de calcul de décodage muni d'un sous-bloc de déconvolution effectuant une déconvolution et une opération d'argument maximum ;
• dans le réseau neuronal selon l'invention :

- la première chaîne neuronale multicouche d'encodage peut comprendre, en sortie du bloc de calcul d'encodage de rang N, une connexion résiduelle de sortie de données résiduelles et une connexion principale avec un bloc final de calcul d'encodage global, de rang N+1, comprenant un premier et un deuxième sous-blocs effectuant chacun trois convolutions et une opération de sous-échantillonnage, un troisième et un quatrième sous-bloc de calcul d'encodage effectuant chacun une convolution, suivi d'une opération de rectification, suivi d'une opération d'abandon, un cinquième sous-bloc effectuant une convolution, et un sixième sous-bloc effectuant une déconvolution telle qu'un fichier sortant du sixième bloc présente une dimension identique à la dimension d'un fichier sortant du bloc de calcul d'encodage de rang N, et dans lequel
- le sous-bloc de fusion du bloc de calcul de décodage de rang 1 de la chaîne neuronale multicouche de décodage reçoit les fichiers générés par le bloc de calcul d'encodage global de rang N+1 de la première chaîne neuronale multicouche d'encodage, des données résiduelles provenant de la connexion résiduelle de sortie du bloc de calcul d'encodage de rang N de la première chaîne neuronale multicouche d'encodage, et

les fichiers générés par le bloc de calcul d'encodage de rang N de la deuxième chaîne neuronale multicouche d'encodage ; et/ou
• la première et la deuxième chaîne neuronales multicouche d'encodage peuvent être d'architecture de réseau neuronal convolutif choisies parmi les réseaux VGG1 6 et les réseaux RESNet.

L'invention a également pour objet un procédé de segmentation sémantique d'un document de texte complexe à traiter, le procédé comprenant les étapes suivantes :

a) obtenir un fichier image numérique initial du document de texte complexe à traiter, le fichier image présentant une dimension initiale déterminée ;
b) réaliser une reconnaissance optique de caractères du fichier image numérique pour obtenir un fichier texte numérique

c) fournir une liste prédéfinie de types d'objet et effectuer une opération de segmentation pour assigner à chaque mot du fichier texte numérique un type d'objet choisi dans la liste prédéfinie de types d'objet,

d) générer un fichier image masque, codé en valeurs en remplaçant chaque mot par une zone de valeur correspondant au type d'objet assigné audit mot, le fichier image masque étant de même dimension initiale déterminée que le fichier image numérique ;

e) fournir une première chaîne neuronale multicouche d'encodage comprenant au moins N blocs de calcul d'encodage successifs liés entre eux par une connexion principale, N étant un entier compris entre 2 et 8, les blocs de calcul d'encodage de rang 1 à N-1 comprenant chacun une connexion résiduelle de sortie de données résiduelles, chacun des N blocs de calcul d'encodage exécutant au moins une convolution et au moins une opération de sous-échantillonnage, de telle sorte que :

- le bloc de calcul d'encodage de rang 1 reçoit un fichier de dimension initiale déterminée et génère un fichier de dimension de rang 1 inférieure à la dimension initiale déterminée ; et
- qu'un bloc de calcul d'encodage de rang i, i étant un entier compris entre 2 et N, reçoit par la connexion principale avec le bloc de calcul d'encodage de rang précédent i-1 un fichier de dimension de rang précédent i-1 et génère un fichier de rang i avec une dimension de rang i inférieure à la dimension de rang précédent i-1 du fichier reçu du bloc de calcul d'encodage de rang précédent i-1, ;

f) fournir une deuxième chaîne neuronale multicouche d'encodage, parallèle à la première chaîne neuronale multicouche d'encodage et comprenant un même nombre N de blocs de calcul d'encodage successifs que la première chaîne neuronale multicouche d'encodage, les N blocs de calcul d'encodage successifs de la deuxième chaîne neuronale multicouche d'encodage étant liés entre eux par une connexion principale, les blocs de calcul d'encodage de rang 1 à N-1 comprenant chacun une connexion résiduelle de sortie de données résiduelles, chacun des N blocs de calcul d'encodage exécutant au moins une convolution et au moins une opération de sous-échantillonnage, de telle sorte que :

- le bloc de calcul d'encodage de rang 1 reçoit un fichier de dimension initiale déterminée et génère un fichier de dimension de rang 1 inférieure à la dimension initiale déterminée ; et
- qu'un bloc de calcul d'encodage de rang i, i étant un entier compris entre 2 et N, reçoit par la connexion principale avec le bloc de calcul d'encodage de rang précédent i-1 un fichier de dimension de rang précédent i-1 et génère un fichier de rang i avec une dimension de rang i inférieure à la dimension de rang précédent i-1 du fichier reçu du bloc de calcul d'encodage de rang précédent i-1 ;

g) fournir une chaîne neuronale multicouche de décodage comprenant un même nombre N de blocs de calcul de décodage successifs que la première chaîne neuronale multicouche d'encodage comprend de blocs de calcul d'encodage, chaque bloc de calcul de décodage étant liés entre eux par une connexion principale, chaque bloc de calcul de décodage comprenant un sous-bloc de fusion exécutant au moins une fusion de fichiers de dimensions identiques, suivi d'un sous-bloc de déconvolution exécutant au moins une déconvolution des fichiers fusionnés par le sous-bloc de fusion, les blocs de calcul de décodage étant reliés aux blocs de calcul de codage de la première et de la deuxième chaîne neuronale multicouche d'encodage de telle sorte que :

- le sous-bloc de fusion du bloc de calcul de décodage de rang 1 reçoit les fichiers générés par les blocs de calcul d'encodage de rang N de la première et de la deuxième chaîne neuronale multicouche d'encodage ;
- le sous-bloc de fusion du bloc de calcul de décodage de rang i, pour i compris entre 2 et N, reçoit les fichiers générés par le sous-bloc de déconvolution du bloc de calcul de décodage de rang i-1, ainsi que des données résiduelles provenant de la connexion résiduelle de sortie du bloc de calcul d'encodage de rang N-(i-1) de la première et de la deuxième chaîne neuronale multicouche d'encodage

h) encoder le fichier image numérique dans la première chaîne neuronale multicouche d'encodage ;

i) encoder le fichier image masque dans la deuxième chaîne neuronale multicouche d'encodage ;

j) le sous bloc de déconvolution de rang N générant un fichier image masque de segmentation sémantique constitué de pixels codés en valeurs, chaque valeur correspondant à un type d'objet de la liste prédéfinie, le fichier image masque de segmentation sémantique étant de même dimension que le fichier image numérique initial.

Selon des formes de réalisation particulières qui peuvent être combinées entre elles :

- le procédé peut comprendre, en outre, une étape I) de superposition du fichier texte numérique et du fichier image masque de segmentation sémantique, et une étape m) de classement consistant à assigner à chaque mot du fichier texte numérique le type d'objet du rectangle du fichier image masque de segmentation sémantique superposé audit mot; et/ou

- le procédé peut comprendre, en outre, une étape k) de post-traitement du fichier image masque de segmentation sémantique, cette étape comprenant un calcul de coordonnées de rectangle recouvrant des pixels adjacents de même valeur, et une génération d'un fichier image masque de segmentation sémantique post-traité, une étape l') de superposition du fichier texte numérique et du fichier image masque de segmentation sémantique post-traité, et une étape m') de classement consistant à assigner à chaque mot du fichier texte numérique le type d'objet du rectangle du fichier image masque de segmentation sémantique post-traité superposé audit mot.

L'invention a également pour objet un dispositif électronique comprenant un moyen de capture d'une image d'un document de texte complexe à traiter et une unité centrale programmée pour comprendre un réseau neuronal précédent et mettre en oeuvre le procédé précédent.

Avantageusement, le dispositif électronique peut être choisi parmi un scanner, une imprimante, un photocopieur et un smartphone.

D'autres caractéristiques de l'invention seront énoncées dans la description détaillée ci-après faite en référence aux figures annexées, données à titre d'exemple, et qui représentent, respectivement :

[Fig. 1], une vue schématique du principe de convolution appliqué à un pixel d'une image de départ;

[Fig. 2], une vue schématique du principe de déconvolution appliqué à un pixel d'une image de départ;

[Fig. 3], une vue schématique d'une opération de sous-échantillonnage appliquée à une image de départ;

[Fig. 4], une vue schématique en plan d'un premier mode de réalisation d'un réseau neuronal selon l'invention ;

[Fig. 5], une vue schématique en plan d'un deuxième mode de réalisation d'un réseau neuronal selon l'invention ; et

[Fig. 6], une vue schématique en plan détaillée du bloc final de calcul d'encodage global, de rang N+1 du deuxième mode de réalisation de réseau neuronal selon l'invention.

Par convention, on entend par convolution sur une image (ici appelée simplement convolution) l'application d'un filtre par déplacement sur l'ensemble des pixels d'une image en prenant en compte les pixels voisins. Plus formellement, il s'agit d'une opération mathématique entre deux objets : une image de départ (qui est, pour l'ordinateur, une matrice, c'est-à-dire un tableau de dimension n : par exemple une hauteur et une largeur et des valeurs de codage RGB de chaque pixel) et un filtre (qui est aussi une matrice). La convolution applique le filtre sur l'image, pixel par pixel, en suivant une formule mathématiquement prédéfinie. Une convolution peut servir à flouter une image, améliorer sa netteté, détecter les contours, etc. et son effet dépend du filtre utilisé. Appliquer une convolution sur un certain objet peut réduire sa dimension, c'est-à-dire le nombre de pixels en hauteur et en largeur de l'objet (considéré comme une matrice).

En notant I l'image, F le filtre de [x1 ,x2] * [y1 ,y2] et R le résultat de la convolution de I par F, la formule de la convolution est :

[Math. 1]

$$R(x,y) = (I * \mathrm{F})(x,y) = \sum_{i=x1}^{x2} \sum_{j=y1}^{y2} F(i,j) * I(x-i, y-j)$$

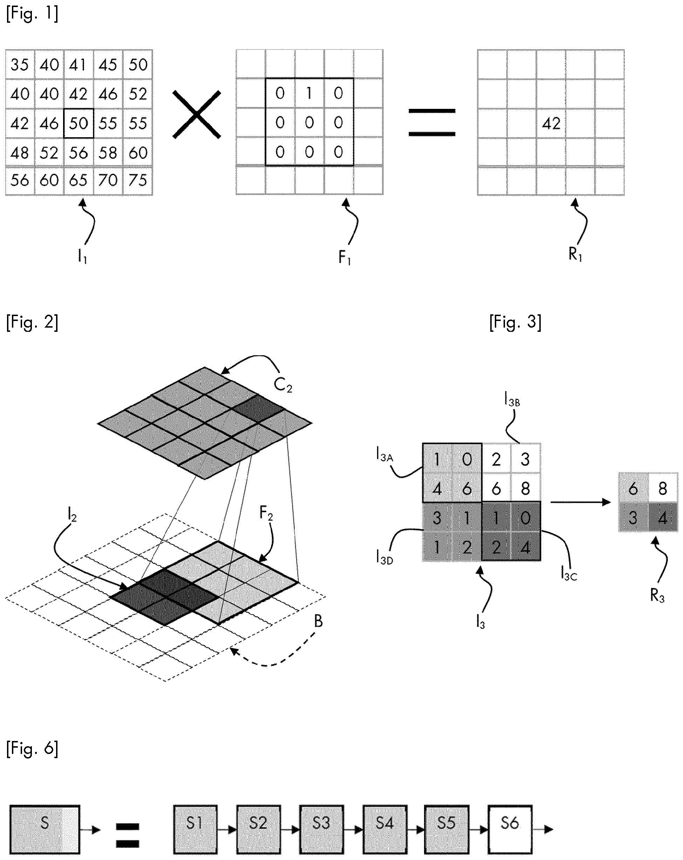

La figure 1 illustre un exemple de convolution appliquée à un seul pixel P1 par souci de clarté. La convolution consiste à recalculer la valeur du pixel P1 de l'image de départ I1 en se basant sur la valeur du pixel lui-même et sur la valeur des pixels environnants le pixel à recalculer.

Chaque pixel environnant est affecté d'un coefficient de calcul, l'ensemble des coefficients utilisés étant regroupés dans un tableau de valeurs constituant le filtre F1.

La valeur finale du pixel dans l'image finale R1 correspond à un calcul prenant en compte tous les pixels environnants du pixel considéré P1 et le pixel P1, combinés un à un aux coefficients du masque. Ensuite, le masque « glisse » au pixel suivant et ainsi de suite pour construire l'image finale complète.

Dans l'exemple, en appliquant le filtre F1 au pixel P1 de valeur 50 dans l'image de départ I1, on obtient un pixel P1' dans l'image finale R1 de valeur 42.

Inversement, par convention, on entend par déconvolution une opération mathématique ayant pour but d'inverser les effets d'une convolution. C'est une convolution couplée à une opération de suréchantillonnage qui permet d'augmenter la dimension d'un objet, c'est-à-dire le nombre de pixels en hauteur et en largeur, au lieu de la diminuer.

Une opération de suréchantillonnage est une opération qui agrandit virtuellement la dimension d'un objet, c'est-à-dire le nombre de pixels en hauteur et en largeur. Dans l'exemple illustré en figure 2, on ajoute à l'image de départ I2, des pixels de valeur déterminée (ici 0) pour obtenir une image intermédiaire B plus grande. Puis, on génère une image finale R2 plus grand que l'image de base A en appliquant un filtre F2 sur l'image intermédiaire B.

On entend également par opération de sous échantillonnage, telle qu'illustrée en figure 3, une opération qui prend en entrée une zone I3 de taille prédéfinie d'une image de départ, subdivise la zone I3 en n sous-tableaux de taille prédéfinie (ici n est égal à 4 et la taille est (2,2)) et génère une nouvelle zone R3 qui ne contient que certaines valeurs (par exemple les valeurs maximales, les valeurs minimales ou les valeurs moyennes selon le filtre qui est appliqué) de chaque sous-tableau I3A, I3B, I3C, I3D, la zone I3. R3 est donc de la taille de I3 divisée par n. ici, I3 est un carré de seize pixels, et R3 est un carré de quatre pixels, n étant égal à 4.

L'invention propose un réseau neuronal utilisant de manière astucieuse un ensemble de convolutions et de déconvolution, permettant, à partir d'un document texte à traiter et d'un fichier image du document texte à traiter, d'identifier les structures du document texte à traiter et d'améliorer significativement le classement ultérieur des mots du texte en fonction des structures logiques et sémantiques dans lesquels ils apparaissent.

Un réseau neuronal est un objet mathématique auquel on attribue une architecture, qui n'est autre que l'ordre et la façon d'appliquer des opérations d'une certaine nature (par exemple des convolutions) sur un (ou des) objet d'entrée, ici un document de texte complexe à traiter. Dans le cas de l'invention, le réseau neuronal est composé, d'une manière générale, d'une partie d'encodage - un ensemble d'opérations prenant l'objet en entrée (par exemple une image) et créant un autre objet ou fichier numérique, dénué de sens physique, mais portant des informations sémantiques riches - puis d'une partie de décodage, qui est un ensemble d'opérations (par exemple des déconvolutions) calculant l'objet recherché (par exemple un masque de segmentation) à partir de l'objet généré par la partie d'encodage.

Le réseau neuronal de segmentation sémantique selon l'invention se caractérise par le fait qu'il est multimodal en ce sens que sa partie d'encodage comprend deux chaînes neuronales parallèles traitant deux fichiers différents obtenus à partir du même document texte à traiter, ces deux chaînes neuronales d'encodage parallèle étant fusionnées en fin de chaîne avant d'entrer dans une chaîne neuronale de décodage unique.

Une chaîne neuronale est une chaîne de blocs de calcul successifs (blocs également appelés couches) liés entre eux par des connexions principales (ou directes), de sorte que l'objet sortant d'un bloc de calcul entre directement dans le bloc suivant.

Les chaînes neuronales d'encodage et la chaîne de décodage selon l'invention sont également caractérisées par le fait qu'elles présentent un nombre identique de blocs de calcul générant, en sortie de chaque bloc de même rang dans la chaîne, des objets de dimensions identiques, c'est-à-dire de même nombre de pixels en hauteur et en largeur. Dans un mode de réalisation optionnel décrit par la suite, la première chaîne neuronale d'encodage peut comprendre un bloc supplémentaire, mais dont le fichier de sortie est de dimension identique à la dimension (c'est-à-dire le nombre de pixels en hauteur et en largeur) du fichier qu'il reçoit en entrée.

En outre, le réseau neuronal selon l'invention comprend également des connexions résiduelles (ou indirectes ; voir ci-après) reliant deux chaînes neuronales différentes, à savoir une chaîne neuronale d'encodage et la chaîne neuronale de décodage. Plus précisément, chaque connexion résiduelle relie la sortie d'un bloc générant un fichier de dimension n des chaînes neuronales d'encodage, à la sortie du bloc de la chaîne neuronale de décodage générant un fichier de même dimension n que le bloc des chaînes neuronales d'encodage après lequel la connexion résiduelle est placée. En d'autres termes, une connexion résiduelle forme un pont reliant deux couches de deux chaînes neuronales différentes. Ces connexions supplémentaires permettent d'éviter une ou plusieurs couches (ou blocs) de traitement non linéaire et permettent d'ajouter une contribution résiduelle des couches précédentes avant la transformation de la dimension du fichier par les couches (ou blocs) suivantes qui sont ainsi « sautées », ce qui assure une meilleure stabilité du réseau.

Dans le réseau neuronal selon l'invention, chaque couche de chaque chaîne neuronale d'encodage est reliée à une couche (ou bloc) de la chaîne neuronale de décodage par une connexion résiduelle, de sorte que les couches (ou blocs) générant des fichiers de mêmes dimensions (même nombre de pixels en hauteur et en largeur) dans les chaînes neuronales d'encodage sont reliées à la chaîne neuronale de décodage après une couche (ou bloc) générant un fichier de même dimension.

Une connexion résiduelle entre deux couches de deux chaînes neuronales permet de conserver un objet en mémoire avant que celui-ci ne subisse une transformation/une opération dans le bloc suivant, puis de le re-exploiter plus tard dans la chaîne de traitement pour utiliser les informations qu'il contient. Ainsi, une connexion résiduelle ne peut se faire qu'entre deux couches, c'est-à-dire après deux blocs générant des objets (ou des fichiers) de mêmes dimensions, c'est-à-dire de même nombre de pixels en hauteur et en largeur.

L'avantage est de pouvoir conserver ou renforcer certaines informations qui peuvent se perdre au fil des opérations. Comme décrit par la suite, dans le cas de la présente invention, les convolutions successives peuvent faire perdre un certain sens du détail à l'image : en fonction des filtres appliqués les objets les plus fins ou les plus grossiers peuvent devenir difficilement discernables. Ajouter des connexions résiduelles permet de conserver ces détails.

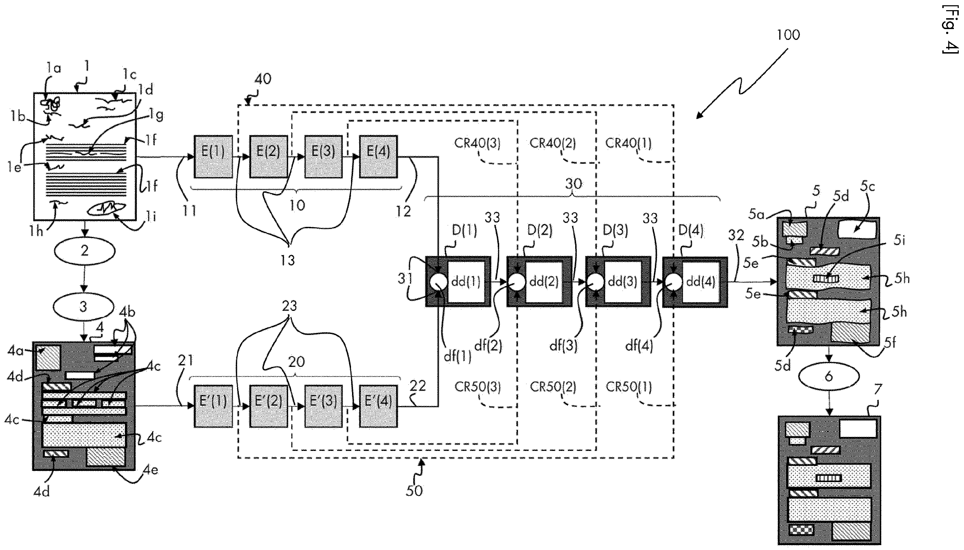

Plus précisément, le réseau neuronal 100 selon l'invention, illustré en figure 4, comprend une première chaîne neuronale multicouche d'encodage 10 destinée à recevoir un fichier image initial du document à traiter. La première chaîne neuronale d'encodage 10 présente donc une entrée 11 recevant le fichier image numérique initial du document à traiter, une succession de blocs de calculs d'encodage E(j) (j étant un entier compris entre 1 et N, et N étant un entier compris entre 2 et 8), et une sortie 12. Sur la figure 4, N est égal à 4.

Le réseau neuronal selon l'invention comprend également une deuxième chaîne neuronale multicouche d'encodage 20 ayant une entrée 21 recevant un deuxième type de fichier décrit ci-après, une succession de blocs de calculs d'encodage E'(j) (j étant un entier compris entre 1 et N, et N étant un entier compris entre 2 et 8), et une sortie 22. Sur la figure 4, N est égal à 4. Il y a autant de blocs de calculs dans la première et la deuxième chaîne neuronale d'encodage.

La sortie 12 de la première chaîne neuronale d'encodage et la sortie 22 de la deuxième chaîne neuronale d'encodage sont connectées à l'entrée 31 d'une chaîne neuronale multicouche de décodage 30 comprenant une succession de blocs de calculs de décodage D(j) (j étant un entier compris entre 1 et N, et N étant un entier compris entre 2 et 8), et une sortie 32. Sur la figure 4, N est égal à 4.

L'une des caractéristiques de l'invention est de traiter, en parallèle, dans chaque chaîne neuronale d'encodage 10-20, deux fichiers différents 1-2 obtenus à partir du même document texte devant être traité.

Dans la première chaîne d'encodage 10, on traite une image 1 du document texte, telle qu'elle peut être obtenue par un scanner ou une photo par exemple. Ce fichier image 1 est une matrice de pixel de dimension initiale R0.

Comme on peut le constater sur la figure 4, cette image 1 représente un document comprenant un logo 1a avec le nom 1b de l'entreprise émettrice du document, un destinataire et son adresse 1c, un titre général 1d, des titres de paragraphe 1e, des paragraphes 1f, une date 1g dans l'un des paragraphes 1f, une date 1h de signature et une signature 1i.

Si l'oeil et le cerveau humain savent immédiatement classer les objets d'une image en fonction de leur type (ici : logo, destinataire/adresse, titre général, titre de paragraphe, paragraphe, date, date de signature et signature), l'objectif de l'invention est que ce soit le réseau neuronal 100 lui-même qui puisse, seul, classer ces objets en fonction de leur type en vue d'une indexation précise et riche d'informations.

Dans la deuxième chaîne d'encodage, on traite un fichier image masque 4 généré à l'issue d'une opération de segmentation 3 effectuée sur un fichier texte 2 obtenu par reconnaissance de caractère du fichier image 1 du document à traiter.

Le fichier image masque 4, également appelé masque de segmentation, est une image générée à partir d'une image de départ à l'issue d'une opération de segmentation (ou de classification) de l'image. Cette opération est destinée à diviser l'image de départ en différentes zones, selon la nature des objets contenus dans l'image de départ. Par exemple, si l'image de départ est une image d'un texte comportant des objets divers (un fond, des paragraphes de texte, un logo, des titres de parties, un tableau, une date, une signature, une adresse, etc.), l'opération de segmentation vise à identifier à quel objet appartient chaque pixel de l'image. Pour cela, on utilise une liste prédéfinie de types d'objet que l'on souhaite identifier dans l'image de départ, chaque objet étant associé à une valeur de pixel. Si le fichier de départ est un fichier texte numérique obtenu par reconnaissance de caractère d'une image, l'opération de segmentation vise à identifier à quel objet appartient chaque mot du fichier texte numérique.

Pour assigner à chaque pixel ou à chaque mot du fichier texte numérique un type d'objet choisi dans la liste prédéfinie, on utilise un algorithme de classification utilisant de la prédiction textuelle. Ce type d'algorithme, basé sur un apprentissage non supervisé permet une segmentation et une structuration sémantique automatique du texte. On peut citer, simplement à titre d'exemple, la méthode de classification sémantique décrite dans l'article « Document Structure Analysis Based on Layout and Textual Features» de Stefan Klink, Andreas Dengel et Thomas Kieninger, Computer science, 2000.

Plus généralement, il est possible d'avoir des outils simples de structuration logique/sémantique de documents textuels en s'appuyant sur des modèles dont les composants (ou règles) sont des expressions régulières, plus des compléments sur la position absolue/relative dans la page et éventuellement sur la casse des caractères (gras, italique, etc.).

Ainsi, de manière synthétique, le fichier image masque 4 est fabriqué de la manière suivante :

- le document est scanné et soumis à une reconnaissance de caractères (OCR) ;

- le fichier résultat de l'OCR (texte avec coordonnées et éventuellement des informations sur la casse) est envoyé à un algorithme de structuration logique/sémantique s'appuyant essentiellement sur le contenu textuel ;

- cet algorithme retourne une structuration sous forme de zones avec un type (table, titre, paragraphe, ...) et des coordonnées ;

- le masque 4 est construit à partir de cette structuration en associant à chaque pixel P couvert par une zone Z une valeur C (par exemple traduite sous la forme d'une couleur C) correspondant au type T de ladite zone Z (avec une valeur par défaut pour les pixels non couverts), de sorte que le masque 4 a les mêmes dimensions que l'image initiale.

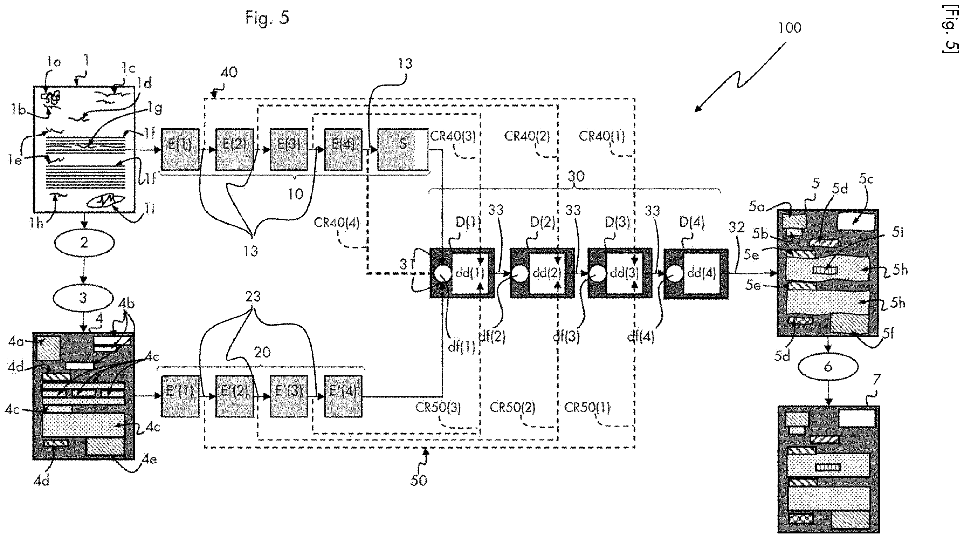

Puis, on génère un fichier image masque, codé en valeurs, illustrant le résultat de cette segmentation de sorte que chaque pixel de l'image a la valeur qui correspond à l'objet du pixel ou du mot présent au même endroit sur l'image de départ. En d'autres termes, on génère le fichier image masque 4, en remplaçant chaque mot par une zone de valeur (par exemple un rectangle) correspondant au type d'objet assigné audit mot. Pour finir, le fichier image masque a la même dimension, c'est-à-dire le même nombre de pixels en hauteur et en largeur, que la dimension initiale R0 du fichier image de départ, ou du fichier image ayant servi à générer le fichier texte numérique par reconnaissance de caractères.
Dans le procédé selon l'invention, on réalise une reconnaissance optique de caractères du fichier image 1 du document pour obtenir un fichier texte numérique 2. Puis, à partir d'une liste prédéfinie de types d'objet auxquels peuvent appartenir les mots du texte (par exemple : logo, destinataire/adresse, titre général, titre de paragraphe, paragraphe, date, date de signature et signature), on effectue une opération de segmentation 3 pour assigner à chaque mot du fichier texte numérique un type d'objet choisi dans la liste prédéfinie de types d'objet. On peut alors générer un fichier image masque 4 dont chaque pixel est codé en valeur, en attribuant à chaque pixel situé dans les mêmes coordonnées géographiques du mot et de son voisinage (par simplicité remplacés par des rectangles), la valeur attribuée au type d'objet assigné audit mot. Sur les figures 4 et 5, les pixels sont codés selon des valeurs symbolisées par des motifs de remplissage ou des couleurs, comme cela serait fait sur un écran d'ordinateur. Les couleurs ou les motifs en soi ne sont pas importants, ils servent simplement à matérialiser le codage des pixels selon différentes valeurs. La zone sans mot est attribuée au fond et illustrée, sur la figure, en gris foncé uni. Bien entendu, on regroupe avantageusement les zones voisines de même valeur pour obtenir un fichier image masque composé de pixels codés en valeurs de types d'objets.
Lors de la mise en oeuvre automatique par un système informatique, il n'y a pas de nécessité d'éditer réellement le masque puisqu'aucun humain ne le consulte. Ainsi, tous les pixels d'une zone déterminée située aux coordonnées géographiques d'un mot à qui un type d'objet a été attribué lors de l'opération de segmentation, possèdent la même valeur, correspondant à une valeur.
Ce fichier masque 4 est de même dimension initiale déterminée R0 que le fichier image numérique 1 du document à traiter.
Le fichier image masque 4 ainsi généré comprend des informations de segmentation du document à traiter.
Comme illustré en figure 4, le fichier image masque 4 issu de l'OCR 2 et de la segmentation 4 est imparfait en raison de l'imperfection des logiciels connus de reconnaissance optique de caractère et de segmentation. Dans l'exemple illustré, le fichier image 4 ne fait pas de distinction entre le logo 1a et le nom 1b de l'entreprise émettrice qui sont regroupés sous un même rectangle 4a en hachures fines codant pour les dessins du texte. Le destinataire 1c et le titre général 1d sont répartis en trois zones distinctes 4b, mais classés sous un même type (rectangles blancs unis 4b). Un titre de partie 1e a été classé de la même manière que les paragraphes 1f, tout comme la date 1g située dans un paragraphe 1f, le tout étant réparti en plusieurs zones distinctes 4c classées sous un même type : rectangles à points 4c. Enfin la date de signature 1h a été classée de la même manière que les titres de partie 1e et illustré par un rectangle en hachures larges 4d. La signature a bien été reconnue comme un dessin dans le texte, elle a été remplacée par un rectangle 4e en hachures fines. Ainsi, le masque 4 est généralement imparfait, car il n'exploite qu'une partie des informations présentes dans l'image, celles fournies par les outils d'OCR.
On comprend donc qu'indexer un document à partir d'un tel fichier image masque 4 aboutirait nécessairement à de nombreuses erreurs. En traitant ce fichier image masque 4 en parallèle du fichier image 1 dans le réseau neuronal selon l'invention, on améliore significativement la classification automatique des différentes zones, ce qui permettra, in fine, une indexation automatique beaucoup plus efficace des documents.
Selon l'invention, le réseau neuronal comprend également un premier pont 40 de connexions résiduelles parallèles CR40(k), k étant un entier compris entre 1 et N-1, entre chacune des couches E(1) à E(N-1) de la première chaîne neuronale multicouche d'encodage 10 et chacune des couches D(1) à D(N-1) de la chaîne neuronale multicouche de décodage 30.
Le réseau neuronal 100 selon l'invention, comprend également un deuxième pont 50 de connexions résiduelles parallèles CR50(k), k étant un entier compris entre 1 et N-1, entre chacune des couches E'(1) à E'(N-1) de la deuxième chaîne neuronale multicouche d'encodage 20 et chacune des couches D(1) à D(N-1) de la chaîne neuronale multicouche de décodage 30.
Sur la figure 4, N étant égal à 4, chaque pont 40-50 comprend trois connexions résiduelles parallèles : CR40(1), CR40(2), CR40(3), CR50(1), CR50(2) et CR50(3).

Comme expliqué précédemment, les connexions résiduelles parallèles des premier et deuxième ponts de connexions résiduelles générant des fichiers de mêmes dimensions, c'est-à-dire de même nombre de pixels en hauteur et en largeur, sont reliées après une couche de la chaîne neuronale multicouche de décodage générant un fichier de même dimension.

Ainsi, sur la figure 4 :

- la connexion résiduelle CR40(1) relie la sortie du bloc E(1) de la première chaîne neuronale multicouche d'encodage 10 et la sortie du bloc D(N-1) (le bloc D(3) sur la figure 4) de la chaîne neuronale multicouche de décodage 30 ;
- la connexion résiduelle CR40(2) relie la sortie du bloc E(2) de la première chaîne neuronale multicouche d'encodage 10 et la sortie du bloc D(2) de la chaîne neuronale multicouche de décodage 30 ;
- la connexion résiduelle CR40(3) relie la sortie du bloc E(3) de la première chaîne neuronale multicouche d'encodage 10 et la sortie du bloc D(1) de la chaîne neuronale multicouche de décodage 30 ;
- la connexion résiduelle CR50(1) relie la sortie du bloc E'(1) de la deuxième chaîne neuronale multicouche d'encodage 20 et la sortie du bloc D(N-1) (le bloc D(3) sur la figure 4) de la chaîne neuronale multicouche de décodage 30 ;
- la connexion résiduelle CR50(2) relie la sortie du bloc E'(2) de la deuxième chaîne neuronale multicouche d'encodage 20 et la sortie du bloc D(2) de la chaîne neuronale multicouche de décodage 30 ; et
- la connexion résiduelle CR50(3) relie la sortie du bloc E'(3) de la deuxième chaîne neuronale multicouche d'encodage 20 et la sortie du bloc D(1) de la chaîne neuronale multicouche de décodage 30.

En effet, les blocs de calcul des première et deuxième chaînes d'encodage 10-20 effectuant des convolutions, la dimension des fichiers sortant de chaque bloc diminue. Inversement, les blocs de calcul de la chaîne d'encodage 30 effectuant des déconvolutions, la dimension des fichiers sortant de chaque bloc augmente jusqu'à obtenir un fichier de même dimension initiale R0 que le fichier image 1 ou le fichier image masque 4.

Ainsi, les connexions résiduelles ne se croisent jamais au sein d'un même pont 40-50.

Plus en détail, la première chaîne neuronale multicouche d'encodage 10 comprend N blocs de calcul d'encodage successifs E(1) à E(N) liés entre eux par une connexion principale 13 (en trait plein sur les figures), N étant un entier compris entre 2 et 8, chacun des N blocs de calcul d'encodage exécutant au moins une convolution et au moins une opération de sous-échantillonnage. Ainsi, lorsque le bloc de calcul d'encodage E(1) de rang 1 reçoit un fichier de dimension initiale déterminée R0, il génère un fichier de dimension de rang 1 inférieure à la dimension initiale déterminée R0.

Plus généralement, lorsqu'un bloc de calcul d'encodage E(i) de rang i, i étant un entier compris entre 2 et N, reçoit par la connexion principale 13 avec le bloc de calcul d'encodage E(i-1) de rang précédent i-1, un fichier de dimension de rang précédent i-1, il génère un fichier de rang i avec une dimension de rang i inférieure à la dimension de rang précédent i-1 du fichier reçu du bloc de calcul d'encodage E(i-1) de rang précédent i-1.

Il en va de même de la deuxième chaîne neuronale multicouche d'encodage 20, parallèle à la première chaîne neuronale multicouche d'encodage 10. Elle comprend un même nombre N de blocs de calcul d'encodage successifs E'(1) à E'(N) que la première chaîne neuronale multicouche d'encodage 10 comprend de blocs de calcul d'encodage.

Les N blocs de calcul d'encodage successifs E'(1) à E'(N) de la deuxième chaîne neuronale multicouche d'encodage 20 sont liés entre eux par une connexion principale 23 (en trait plein sur les figures) et exécutent au moins une convolution et au moins une opération de sous-échantillonnage, de telle sorte que le bloc de calcul d'encodage E'(1) de rang 1 reçoit un fichier de dimension initiale déterminée R0 et génère un fichier de dimension de rang 1 inférieure à la dimension initiale déterminée R0.

Plus généralement, un bloc de calcul d'encodage E'(i) de rang i, i étant un entier compris entre 2 et N, reçoit par la connexion principale 23 avec le bloc de calcul d'encodage E'(i-1) de rang précédent i-1 un fichier de dimension de rang précédent i-1 et génère un fichier de rang i avec une dimension de rang i inférieure à la dimension de rang précédent i-1 du fichier reçu du bloc de calcul d'encodage E'(i-1) de rang précédent i-1.

En outre, la chaîne neuronale multicouche de décodage 30 comprend un même nombre N de blocs de calcul de décodage successifs D(i), pour i compris de 1 à N (D(1) à D(N)) que la première chaîne neuronale multicouche d'encodage 10 comprend de blocs de calcul d'encodage, les blocs de calcul de décodage D(1) à D(N) successifs étant liés entre eux par une connexion principale 33.

Chaque bloc de calcul de décodage D(i), i allant de 1 à N (sur la figure N=4), comprend un sous-bloc de fusion df(i) exécutant au moins une fusion de fichiers de dimensions identiques pour générer un fichier résultant, le sous-bloc de fusion df(i) étant connecté à un sous-bloc de déconvolution dd(i) exécutant au moins une déconvolution du fichier résultant transmis par le sous-bloc de fusion df(i) correspondant.

Les blocs de calcul d'encodage de rang 1 à N-1 des première et deuxième chaînes neuronales multicouches d'encodage 10-20 comprennent en outre chacun une connexion résiduelle de sortie de données résiduelles reliée aux sous-blocs de déconvolution dd(1) à dd(N) des blocs de calcul de décodage de la chaîne neuronale multicouche de décodage 30 de telle sorte que :

- le sous-bloc de fusion df(1) du bloc de calcul de décodage D(1) de rang 1 reçoit les fichiers générés par les blocs de calcul d'encodage E(N) (directement dans le cadre la figure 4, ou indirectement dans le cadre de l'option décrite en figure 5) et E'(N) de rang N de la première et de la deuxième chaîne neuronale multicouche d'encodage ; et que
- le sous-bloc de fusion df(i) du bloc de calcul de décodage D(i) de rang i, pour i compris entre 2 et N, reçoit les fichiers générés par le sous-bloc de déconvolution dd(i-1) du bloc de calcul de décodage D(i-1) de rang i-1, ainsi que des données résiduelles provenant de la connexion résiduelle de sortie CR40(N-(i-1)) et CR50(N-(i-1)) du bloc de calcul d'encodage E(N-(i-1)) et E'(N-(i-1)) de rang N-(i-1) de la première et de la deuxième chaîne neuronale multicouche d'encodage 10-20.

Ainsi, sur la figure 4 :

- le sous-bloc de fusion df(2) du bloc de calcul de décodage D(2) de rang i=2 reçoit les fichiers générés par le sous-bloc de déconvolution dd(1) du bloc de calcul de décodage D(1) de rang 1, ainsi que des données résiduelles provenant de la connexion résiduelle de sortie CR40(3) et CR50(3) du bloc de calcul d'encodage E(3) et E'(3) de rang N-(2-1)=3 (pour N=4) de la première et de la deuxième chaîne neuronale multicouche d'encodage 10-20 ;
- le sous-bloc de fusion df(3) du bloc de calcul de décodage D(3) de rang i=3 reçoit les fichiers générés par le sous-bloc de déconvolution dd(2) du bloc de calcul de décodage D(2) de rang 2, ainsi que des données résiduelles provenant de la connexion résiduelle de sortie CR40(2) et CR50(2) du bloc de calcul d'encodage E(2) et E'(2) de rang N-(3-1)=2 de la première et de la deuxième chaîne neuronale multicouche d'encodage 10-20 ; et
- le sous-bloc de fusion df(4) du bloc de calcul de décodage D(4) de rang i=4 reçoit les fichiers générés par le sous-bloc de déconvolution dd(3) du bloc de calcul de décodage D(3) de rang 3, ainsi que des données résiduelles provenant de la connexion résiduelle de sortie CR40(1) et CR50(1) du bloc de calcul d'encodage E(1) et E'(1) de rang N-(4-1)=1 de la première et de la deuxième chaîne neuronale multicouche d'encodage 10-20.

Chaque sous-bloc de fusion df(i) effectue une opération terme à terme des fichiers qu'il reçoit et qui sont nécessairement de dimensions identiques.

On entend par opération terme à terme, une opération qui s'effectue sur chaque élément d'un tableau (une image par exemple). Par exemple, une fusion de fichiers des mêmes dimensions, c'est-à-dire de mêmes nombres de pixels en hauteur et en largeur, se fait par une opération terme à terme, c'est-à-dire pixel par pixel pour obtenir un fichier résultat de mêmes dimensions. La valeur de chaque pixel du fichier résultat est obtenue, en appliquant une fonction d'agrégat qui peut être choisie parmi le minimum (on applique au pixel résultat la valeur la plus faible parmi les valeurs des pixels correspondant dans les images de base), le maximum (on applique au pixel résultat la valeur la plus forte parmi les valeurs des pixels correspondant dans les images de base), la moyenne (on applique au pixel résultat la valeur égale à la moyenne des valeurs des pixels correspondant dans les images de base), ou toute autre fonction mathématique telle qu'une moyenne pondérée par la source (on applique au pixel résultat la valeur égale à la moyenne des valeurs des pixels correspondant dans les images de base, la valeur des pixels correspondants étant pondérée en fonction de l'image de base). Dans ce dernier cas, la pondération peut être apprise par le réseau neuronal en fonction des types de sources ou des types d'objets que l'on souhaite identifier. Ainsi, on peut choisir de donner plus de crédit à telle ou telle source en fonction du type d'objet que l'on souhaite identifier.

Avantageusement, la première et de la deuxième chaîne neuronale multicouche d'encodage 10-20 comprennent chacune un premier E(1)-E'(1) et un deuxième E(2)-E'(2) blocs de calcul d'encodage effectuant chacun deux convolutions et une opération de sous-échantillonnage, et un troisième E(3)-E'(3) et un quatrième E(4)-E'(4) bloc de calcul d'encodage effectuant chacun trois convolutions et une opération de sous-échantillonnage.

En outre, la chaîne neuronale multicouche de décodage 30 comprend un premier D(1), un deuxième D(2) et un troisième bloc D(3) de calcul de décodage munis chacun un sous-bloc de déconvolution dd(1)-dd(2)-dd(3) effectuant une déconvolution, ainsi qu'un quatrième bloc D(4) de calcul de décodage muni d'un sous-bloc de déconvolution dd(4) effectuant une déconvolution et une opération d'argument maximum.

On entend par opération d'argument maximum, une opération qui, pour un tableau d'entrée, renvoie les coordonnées de l'élément du tableau qui est le plus grand. Par exemple, dans la figure 3, une opération d'argument maximum conduite sur le tableau I3A enverrait la coordonnée de la case 6.

En sortie 32 de la chaîne de déconvolution 30, le sous-bloc de déconvolution de rang N=4 génère un fichier image masque de segmentation sémantique 5 constitué de pixels codés en valeurs, chaque valeur correspondant à un type d'objet de la liste prédéfinie, le fichier image masque de segmentation sémantique étant de même dimension R0 que le fichier image numérique initial.

Les pixels sont significativement mieux classés dans ce fichier masque 5 traité que dans le fichier masque 4.

En effet, on voit que le nom 1b de l'entreprise émettrice a pu être distingué du logo 1a, car ils sont matérialisés par deux zones différentes 5a et 5b, et qu'ils sont classés dans deux classes différentes, une classe d'image pour le logo (en hachures fines, comme pour la signature) et une classe texte (zone à points). Le destinataire et son adresse sont regroupés en une seule zone 5c (en blanc uni), et le titre général a été individualisé et classé comme tel dans une zone 5d (zone à hachures larges inclinées vers la droite). De même, les titres de paragraphes ont été isolés et classés comme tel dans des zones 5e (zone à hachures larges inclinées vers la gauche), et la date de signature n'est plus confondue avec ces titres puisqu'elle est classée comme date de signature dans une zone 5f (zone à points carrés). Les paragraphes de chaque partie sont regroupés en zones uniformes 5h (zone à points), et la date présente dans l'un des paragraphes a été isolée et classée comme telle dans une zone 5i (zone à hachures verticales).

Les différentes parties étant beaucoup mieux classées grâce au réseau neuronal selon l'invention, l'indexation ultérieure du texte sera beaucoup plus riche en informations, et avec beaucoup moins d'erreurs.

Un réseau neuronal s'exploite en deux phases. Une première phase d'entraînement ou d'apprentissage, durant laquelle il apprend, à partir d'un jeu de données prédéfini, les paramètres de ses opérations (par exemple les paramètres des filtres des convolutions, de déconvolution, de sous-échantillonnage, etc. qui le compose) nécessaires pour obtenir le résultat qu'on lui a demandé. Puis, une deuxième phase d'exploitation ou d'inférence, au cours de laquelle il reçoit un objet qu'il n'a encore jamais vu (une image par exemple) pour élaborer l'objet recherché (par exemple le masque de segmentation) à partir de cet objet d'entrée.

Un jeu de données d'entraînement est un ensemble de données (par exemple des images de documents, ou des fichiers textes numériques obtenus par reconnaissance de caractère, de fichiers images de documents) choisies pour être représentatives de l'ensemble des données (dans l'invention des documents) que l'on peut être amené à traiter par la suite. Un jeu de données d'entraînement est dit « pré annoté » pour un réseau neuronal déterminé si, en plus des données d'entrée qui le compose (dans l'invention, des documents), on dispose de l'ensemble des données de sortie, correspondant au résultat que l'on attend en sortie du réseau neuronal, pour les données d'entrée.

L'invention peut avantageusement être mise en oeuvre en utilisant comme chaînes neuronales d'encodage une chaîne VGG, par exemple le réseau VGG16 qui est illustré dans les figures, ou une chaîne RESNet ou tout autre type d'architecture de réseau neuronal convolutif (connu en anglais sous l'acronyme CNN pour « convolution neural net architecture).

Le procédé de segmentation sémantique d'un document de texte complexe à traiter selon l'invention comprend donc les étapes suivantes :

a) obtenir un fichier image numérique initial 1 du document de texte complexe à traiter, le fichier image présentant une dimension initiale déterminée R0 ;

b) réaliser une reconnaissance optique de caractères du fichier image numérique pour obtenir un fichier texte numérique 2 ;

c) fournir une liste prédéfinie de types d'objet et effectuer une opération de segmentation 3 pour assigner à chaque mot du fichier texte numérique un type d'objet choisi dans la liste prédéfinie de types d'objet,

d) générer un fichier image masque 4, codé en valeurs en remplaçant chaque mot par une zone de valeur correspondant au type d'objet assigné audit mot, le fichier image masque étant de même dimension initiale déterminée R0 que le fichier image numérique.

Dans un réseau neuronal 100 selon l'invention tel que décrit précédemment, on encode le fichier image numérique 1 dans la première chaîne neuronale multicouche d'encodage 10, et on encode le fichier image masque 4 dans la deuxième chaîne neuronale multicouche d'encodage 20 de telle sorte que le sous bloc de déconvolution dd(N) de rang N génère un fichier image masque de segmentation sémantique traité 5 constitué de pixels codés en valeurs, chaque valeur correspondant à un type d'objet de la liste prédéfinie, le fichier image masque de segmentation sémantique traité 5 étant de même dimension R0 que le fichier image numérique initial.

Ensuite, on peut superposer le fichier texte numérique 2 et le fichier image masque de segmentation sémantique traité 5 pour permettre un classement consistant à assigner à chaque mot du fichier texte numérique le type d'objet du rectangle du fichier image masque de segmentation sémantique superposé audit mot, et ainsi indexer le texte du document que l'on veut traiter.

Afin d'améliorer ce traitement, le procédé comprend avantageusement une étape 6 supplémentaire de post-traitement du fichier image masque de segmentation sémantique traité. Cette étape 6 comprend un calcul de coordonnées de rectangle recouvrant des pixels adjacents de mêmes valeurs, et une génération d'un fichier image masque de segmentation sémantique post-traité 7.

Dans ce cas, l'indexation du texte est réalisée en superposant le fichier texte numérique 2 et le fichier image masque de segmentation sémantique post-traité 7, et effectuant un classement consistant à assigner à chaque mot du fichier texte numérique 2 le type d'objet du rectangle du fichier image masque de segmentation sémantique post-traité 7 superposé audit mot.

Les résultats sont encore améliorés si l'on munit la première chaîne neuronale multicouche d'encodage d'un bloc de calcul spécial en fin de chaîne. Cette option est illustrée en figures 5 et 6.

Dans ce mode de réalisation, la première chaîne neuronale multicouche d'encodage 10 comprend, en sortie du bloc de calcul d'encodage de rang N, une connexion résiduelle de sortie de données résiduelles et une connexion principale 13 avec un bloc S final de calcul d'encodage global, de rang N+1.

Comme illustré en figure 6, le bloc S est constitué d'une succession de sous-blocs liés entre eux par une connexion principale et dépourvus de connexion résiduelle.

Le bloc S comprend un premier sous-bloc S1 suivi d'un deuxième sous-bloc S2 effectuant chacun trois convolutions et une opération de sous-échantillonnage. Il comprend également, après le deuxième sous-bloc S2, un troisième sous-bloc S3 suivi d'un quatrième sous-bloc S4 d'encodage effectuant chacun une convolution, puis une opération de rectification, puis une opération d'abandon.

On entend par opération de rectification, une opération qui attribue à chaque résultat d'une convolution sa valeur si cette dernière est positive, ou zéro si sa valeur est négative. En d'autres termes, cette opération renvoie toutes les valeurs positives sur elles-mêmes et toutes les valeurs négatives sur zéro.

On entend par opération d'abandon, une opération qui consiste à ignorer certains paramètres d'un bloc d'opération lors de la phase d'entraînement, afin de le rendre plus robuste. Cela permet d'empêcher le surapprentissage, c'est-à-dire que cela permet d'apprendre à ne restituer que ce qui a été vu, et donc appris. En d'autres termes, certaines valeurs sont volontairement « oubliées » pour permettre au réseau de répondre même s'il a perdu une partie de son information. Cela oblige ainsi le réseau neuronal à ne pas prendre sa décision seulement sur quelques éléments très précis d'information, mais à considérer l'information de manière plus générale. Ce type d'opération est décrit, par exemple, dans l'article « Improving neural networks by preventing co-adaptation of feature detectors » de Geoffrey E. Hinton, Nitish Srivastava, Alex Krizhevsky, Ilya Sutskever, Ruslan R. Salakhutdinov, Computer Science, 3 juillet 2012.

Alternativement à la fonction d'abandon, on peut utiliser tout autre mécanisme d'ajout de bruit dans le réseau pour éviter les phénomènes de surapprentissage.

Le bloc S comprend également, après le sous-bloc S4, un cinquième sous-bloc S5 effectuant une convolution, lui-même suivi d'un sixième sous-bloc S6 effectuant une déconvolution telle qu'un fichier sortant du sixième bloc présente une dimension identique à la dimension d'un fichier sortant du bloc de calcul d'encodage de rang N et entrant dans le bloc S.

En d'autres termes, le fichier de sortie du bloc S est de dimension identique à la dimension (c'est-à-dire le nombre de pixels en hauteur et en largeur) du fichier qu'il reçoit en entrée. Ainsi, le parallélisme des chaînes neuronales d'encodage 10 et 20 n'est pas modifié, car la dimension de l'objet N+1 est strictement identique à la dimension de l'objet N.

Ce qui importe, c'est qu'il n'y ait aucun effet sur la dimension, c'est-à-dire sur le nombre de pixels en hauteur et en largeur, de l'objet reçu par la chaîne neuronale de décodage 30.

Ainsi, dans le mode de réalisation illustré en figure 5, le sous-bloc de fusion df(1) du bloc de calcul de décodage D(1) de rang 1 de la chaîne neuronale multicouche de décodage 30 reçoit :

- les fichiers générés par le bloc de calcul S d'encodage global de rang N+1 de la première chaîne neuronale d'encodage 10, des données résiduelles provenant de la connexion résiduelle CR40(4) de sortie du bloc de calcul d'encodage E(4) de rang N=4 de la première chaîne neuronale d'encodage 10, et
- les fichiers générés par le bloc de calcul d'encodage E'(4) de rang N=4 de la deuxième chaîne neuronale d'encodage 20.

Puisque la dimension de l'objet issu du bloc de calcul de rang N n'est pas modifiée par le bloc S, le sous-bloc de fusion df(1) du bloc de calcul de décodage D(1) de rang 1 reçoit indirectement les fichiers générés par les blocs de calcul d'encodage de rang N de la première chaîne neuronale d'encodage 10 qui a été traité par le bloc S sans que sa dimension n'ait été modifiée.

Le réseau neuronal et le procédé de traitement selon l'invention peuvent avantageusement être mis en oeuvre directement dans un dispositif électronique comprenant un moyen de capture d'une image d'un document de texte complexe à traiter et une unité centrale programmée pour comprendre le réseau neuronal selon l'invention et mettre en oeuvre le procédé selon l'invention.

Par exemple, il peut s'agir d'un scanner, d'une imprimante, d'un photocopieur et d'un smartphone. Dans ce cas, ils comprennent avantageusement une connexion vers un système d'indexation et d'archivage des documents ainsi traités pour pouvoir indexer et archiver automatiquement une grande quantité de documents.

**Revendications**

1. Réseau neuronal multimodal (100) mis en oeuvre par un système informatique comprenant une liste prédéfinie de types d'objet, de segmentation sémantique d'un document de texte complexe à traiter, **caractérisé en ce qu'**il comprend :

◦ une première chaîne neuronale multicouche d'encodage (10) d'un fichier image numérique initial (1) du document à traiter de dimension initiale (R0) déterminée, la première chaîne neuronale d'encodage (10) ayant une entrée (11) recevant le fichier image numérique initial (1) du document à traiter, une pluralité de couches de calcul (E(j)) générant des fichiers de dimensions déterminées, et une sortie (12),

◦ une deuxième chaîne neuronale multicouche d'encodage (20) d'un fichier image masque (4) du document à traiter de dimension initiale déterminée généré à l'issue d'une opération de segmentation (3) effectuée sur un fichier texte (2) obtenu par reconnaissance de caractère du fichier image numérique initial (1) du document à traiter, l'opération de segmentation (3) comprenant en outre l'assignation à chaque mot du fichier texte numérique d'un type d'objet choisi dans la liste prédéfinie de types d'objet et le remplacement de chaque mot par une zone de valeur correspondant au type d'objet assigné audit mot, la deuxième chaîne neuronale d'encodage (20) ayant une entrée (21) recevant le fichier image masque (4), une pluralité de couches de calcul (E'(j)) générant des fichiers de dimensions déterminées, et une sortie (22) ;

◦ une chaîne neuronale multicouche de décodage (30) connectée à la sortie (12) de la première chaîne neuronale multicouche d'encodage (10) et à la sortie (22) de la deuxième chaîne neuronale multicouche d'encodage (20), et comprenant une pluralité de couches de calcul (D(j)) générant des fichiers de dimensions déterminées ;

◦ un premier pont (40) de connexions résiduelles (CR40(k)) parallèles entre les couches (E(j)) de la première chaîne neuronale multicouche d'encodage (10) et les couches (D(j)) de la chaîne neuronale multicouche de décodage (30),

◦ un deuxième pont (50) de connexions résiduelles (CR50(k)) parallèles entre les couches (E'(j)) de la deuxième chaîne neuronale multicouche d'encodage (20) et les couches (D(j)) de la chaîne neuronale multicouche de décodage (30),

les connexions résiduelles (CR40(k), CR50(k)) parallèles des premier et deuxième ponts (40, 50) de connexions résiduelles générant des fichiers de même dimension étant reliées après une couche (D(j)) de la chaîne neuronale multicouche de décodage (30) générant un fichier image masque de segmentation sémantique (5) constitué de pixels codés en valeurs, chaque valeur correspondant à un type d'objet de la liste prédéfinie, le fichier image masque de segmentation sémantique étant de même dimension (R0) que le fichier image numérique initial (1).

2. Réseau neuronal selon la revendication 1, dans lequel :

◦ la première chaîne neuronale multicouche d'encodage (10) comprend au moins N blocs de calcul d'encodage (E(j)) successifs liés entre eux par une connexion principale (13), N étant un entier compris entre 2 et 8, les blocs de calcul d'encodage de rang 1 à N-1 comprenant en outre chacun une connexion résiduelle (CR40(k)) de sortie de données résiduelles, chacun des N blocs de calcul d'encodage exécutant au moins une convolution et au moins une opération de sous-échantillonnage, de telle sorte que :

- lorsque le bloc de calcul d'encodage de rang 1 (E(1)) reçoit un fichier de dimension initiale déterminée (R0), il génère un fichier de dimension de rang 1 inférieure à la dimension initiale déterminée (R0) ; et que
- lorsqu'un bloc de calcul d'encodage de rang i (E(i)), i étant un entier compris entre 2 et N, reçoit par la connexion principale (13) avec le bloc de calcul d'encodage de rang précédent i-1 (E(i-1)), un fichier de dimension de rang précédent i-1, il génère un fichier de rang i avec une dimension de rang i inférieure à la dimension de rang précédent i-1 du fichier reçu du bloc de calcul d'encodage de rang précédent i-1, ;

◦ la deuxième chaîne neuronale multicouche d'encodage (20), parallèle à la première chaîne neuronale multicouche d'encodage (10), comprend un même nombre N de blocs de calcul d'encodage (E'(j)) successifs que la première chaîne neuronale multicouche d'encodage comprend de blocs de calcul d'encodage (E(j)), les N blocs de calcul d'encodage (E'(j)) successifs de la deuxième chaîne neuronale multicouche d'encodage (20) étant liés entre eux par une connexion principale (23), les blocs de calcul d'encodage de rang 1 à N-1 comprenant en outre chacun une connexion résiduelle (CR50(k)) de sortie de données résiduelles, chacun des N blocs de calcul d'encodage exécutant au moins une convolution et au moins une opération de sous-échantillonnage, de telle sorte que :

- le bloc de calcul d'encodage de rang 1 (E'(1)) reçoit un fichier de dimension initiale déterminée (R0) et génère un fichier de dimension de rang 1 inférieure à la dimension initiale déterminée (R0) ; et
- qu'un bloc de calcul d'encodage de rang i (E'(i)), i étant un entier compris entre 2 et N, reçoit par la connexion principale (23) avec le bloc de calcul d'encodage de rang précédent i-1 (E'(i-1)) un fichier de dimension de rang précédent i-1 et génère un fichier de rang i avec une dimension de rang i inférieure à la dimension de rang précédent i-1 du fichier reçu du bloc de calcul d'encodage de rang précédent i-1 ; et dans lequel

◦ la chaîne neuronale multicouche de décodage (30) comprend un même nombre N de blocs de calcul de décodage (D(i)) successifs que la première chaîne neuronale multicouche d'encodage comprend de blocs de calcul d'encodage, les N blocs de calcul de décodage étant liés entre eux par une connexion principale (33), chaque bloc de calcul de décodage (D(i)) comprenant un sous-bloc de fusion (df(i)) exécutant au moins une fusion de fichiers de dimensions identiques, suivi d'un sous-bloc de déconvolution (dd(i)) exécutant au moins une déconvolution des fichiers fusionnés par le sous-bloc de fusion (df(i)), les blocs de calcul de décodage (D(i)) étant reliés aux blocs de calcul de codage (E(i), E'(i)) de la première et de la deuxième chaîne neuronale multicouche d'encodage (10, 20) de telle sorte que :

- le sous-bloc de fusion (df(1)) du bloc de calcul de décodage de rang 1 reçoit les fichiers générés par les blocs de calcul d'encodage (E(N)-E'(N)) de rang N de la première et de la deuxième chaîne neuronale multicouche d'encodage (10-20) ;
- le sous-bloc de fusion du bloc de calcul de décodage (df(i)) de rang i, pour i compris entre 2 et N, reçoit les fichiers générés par le sous-bloc de déconvolution (dd(i-1)) du bloc de calcul de décodage (D(i-1) de rang i-1, ainsi que des données résiduelles provenant de la connexion résiduelle de sortie du bloc de calcul d'encodage (E(N-(i-1)), E'(N-(i-1))) de rang N-(i-1) de la première et de la deuxième chaîne neuronale multicouche d'encodage (10-20).

3. Réseau neuronal selon la revendication 2, dans lequel la première et de la deuxième chaîne neuronale multicouche d'encodage (10-20) comprennent chacune un premier (E(1), E'(1)) et un deuxième (E(2), E'(2)) blocs de calcul d'encodage effectuant chacun deux convolutions et une opération de sous-échantillonnage, et un troisième (E(3), E'(3)) et un quatrième (E(4), E'(4)) bloc de calcul d'encodage effectuant chacun trois convolutions et une opération de sous-échantillonnage.

4. Réseau neuronal selon la revendication 2, dans lequel la chaîne neuronale multicouche de décodage comprend un premier (D(1), un deuxième (D(2)) et un troisième (D(3)) blocs de calcul de décodage munis chacun un sous-bloc de déconvolution (dd(1), dd(2), dd(3)) effectuant une déconvolution, ainsi qu'un quatrième (D(4)) bloc de calcul de décodage muni d'un sous-bloc de déconvolution (dd(4)) effectuant une déconvolution et une opération d'argument maximum.

5. Réseau neuronal selon la revendication 2 ou 3, dans lequel :

◦ la première chaîne neuronale multicouche d'encodage (10) comprend, en sortie du bloc de calcul d'encodage (E(N)) de rang N, une connexion résiduelle (CR40(N)) de sortie de données résiduelles et une connexion principale (13) avec un bloc final de calcul d'encodage global (S), de rang N+1, comprenant un premier et un deuxième sous-blocs (S1, S2) effectuant chacun trois convolutions et une opération de sous-échantillonnage, un troisième (S3) et un quatrième (S4) sous-bloc de calcul d'encodage effectuant chacun une convolution, suivi d'une opération de rectification, suivi d'une opération d'abandon, un cinquième sous-bloc (S5) effectuant une convolution, et un sixième sous-bloc (S6) effectuant une déconvolution telle qu'un fichier sortant du sixième bloc (S6) présente une dimension identique à la dimension d'un fichier sortant du bloc de calcul d'encodage (E(N)) de rang N, et dans lequel
◦ le sous-bloc de fusion (df(1)) du bloc de calcul de décodage (D(1)) de rang 1 de la chaîne neuronale multicouche de décodage (30) reçoit les fichiers générés par le bloc de calcul d'encodage global (S) de rang N+1 de la première chaîne neuronale multicouche d'encodage (10), des données résiduelles provenant de la connexion résiduelle (CR40(N)) de sortie du bloc de calcul d'encodage (E(N)) de rang N de la première chaîne neuronale multicouche d'encodage (10), et les fichiers générés par le bloc de calcul d'encodage (E'(N)) de rang N de la deuxième chaîne neuronale multicouche d'encodage (20).

6. Réseau neuronal selon l'une quelconque des revendications 1 à 5, dans lequel la première et la deuxième chaîne neuronales multicouches d'encodage (10, 20) sont d'architecture de réseau neuronal convolutif choisie parmi les réseaux VGG16 et les réseaux RESNet.

7. Procédé de segmentation sémantique d'un document de texte complexe à traiter, mise en oeuvre par un système informatique comprenant une liste prédéfinie de types d'objets, **caractérisé en ce qu'**il comprend les étapes suivantes :

a) obtenir un fichier image numérique initial (1) du document de texte complexe à traiter, le fichier image numérique initial (1) présentant une dimension initiale déterminée (R0) ;

b) réaliser une reconnaissance optique de caractères du fichier image numérique initial (1) pour obtenir un fichier texte numérique (2) ;

c) fournir une liste prédéfinie de types d'objet et effectuer une opération de segmentation pour assigner à chaque mot du fichier texte numérique un type d'objet choisi dans la liste prédéfinie de types d'objet,

d) générer un fichier image masque (4), codé en valeurs en remplaçant chaque mot par une zone de valeur correspondant au type d'objet assigné audit mot, le fichier image masque étant de même dimension initiale déterminée (R0) que le fichier image numérique initial (1) ;

e) fournir une première chaîne neuronale multicouche d'encodage (10) comprenant au moins N blocs de calcul d'encodage (E(N)) successifs liés entre eux par une connexion principale (13), N étant un entier compris entre 2 et 8, les blocs de calcul d'encodage de rang 1 à N-1 comprenant chacun une connexion résiduelle (CR40(k)) de sortie de données résiduelles, chacun des N blocs de calcul d'encodage (E(N)) exécutant au moins une convolution et au moins une opération de sous-échantillonnage, de telle sorte que :

- le bloc de calcul d'encodage (E(1)) de rang 1 reçoit un fichier de dimension initiale déterminée (R0) et génère un fichier de dimension de rang 1 inférieure à la dimension initiale déterminée (R0) ; et
- qu'un bloc de calcul d'encodage (E(i)) de rang i, i étant un entier compris entre 2 et N, reçoit par la connexion principale (13) avec le bloc de calcul d'encodage (E(i-1)) de rang précédent i-1 un fichier de dimension de rang précédent i-1 et génère un fichier de rang i avec une dimension de rang i inférieure à la dimension de rang précédent i-1 du fichier reçu du bloc de calcul d'encodage de rang précédent i-1, ;

f) fournir une deuxième chaîne neuronale multicouche d'encodage (20), parallèle à la première chaîne neuronale multicouche d'encodage (10) et comprenant un même nombre N de blocs de calcul d'encodage (E'(i)) successifs que la première chaîne neuronale multicouche d'encodage (10), les N blocs de calcul d'encodage (E'(i)) successifs de la deuxième chaîne neuronale multicouche d'encodage (20) étant liés entre eux par une connexion principale (23), les blocs de calcul d'encodage de rang 1 à N-1 comprenant chacun une connexion résiduelle de sortie de données résiduelles (CR50(k)), chacun des N blocs de calcul d'encodage exécutant au moins une convolution et au moins une opération de sous-échantillonnage, de telle sorte que :

- le bloc de calcul d'encodage (E'(1)) de rang 1 reçoit un fichier de dimension initiale déterminée (R0) et génère un fichier de dimension de rang 1 inférieure à la dimension initiale déterminée (R0) ; et
- qu'un bloc de calcul d'encodage (E'(i)) de rang i, i étant un entier compris entre 2 et N, reçoit par la connexion principale avec le bloc de calcul d'encodage de rang précédent i-1 un fichier de dimension de rang précédent i-1 et génère un fichier de rang i avec une dimension de rang i inférieure à la dimension de rang précédent i-1 du fichier reçu du bloc de calcul d'encodage de rang précédent i-1 ;

g) fournir une chaîne neuronale multicouche de décodage (30) comprenant un même nombre N de blocs de calcul de décodage (D(i)) successifs que la première chaîne neuronale multicouche d'encodage (10) comprend de blocs de calcul d'encodage, chaque bloc de calcul de décodage étant liés entre eux par une connexion principale (33), chaque bloc de calcul de décodage (D(i)) comprenant un sous-bloc de fusion (df(i)) exécutant au moins une fusion de fichiers de dimensions identiques, suivi d'un sous-bloc de déconvolution (dd(i)) exécutant au moins une déconvolution des fichiers fusionnés par le sous-bloc de fusion, les blocs de calcul de décodage (D(i)) étant reliés aux blocs de calcul de codage (E(i), E'(i)) de la première et de la deuxième chaîne neuronale multicouche d'encodage (10, 20) de telle sorte que :

- le sous-bloc de fusion (df(1)) du bloc de calcul de décodage (D(1)) de rang 1 reçoit les fichiers générés par les blocs de calcul d'encodage (E(N), E'(N)) de rang N de la première et de la deuxième chaîne neuronale multicouche d'encodage ;
- le sous-bloc de fusion (df(i)) du bloc de calcul de décodage de rang i, pour i compris entre 2 et N, reçoit les fichiers générés par le sous-bloc de déconvolution (D(i-1)) du bloc de calcul de décodage de rang i-1, ainsi que des données résiduelles provenant de la connexion résiduelle de sortie (CR40(N-(i-1)), CR50(N-i-1))) du bloc de calcul d'encodage de rang N-(i-1) de la première et de la deuxième chaîne neuronale multicouche d'encodage

h) encoder le fichier image numérique initial (1) dans la première chaîne neuronale multicouche d'encodage (10) ;

i) encoder le fichier image masque (4) dans la deuxième chaîne neuronale multicouche d'encodage (20) ;

j) le sous bloc de déconvolution (dd(N)) de rang N générant un fichier image masque de segmentation sémantique (5) constitué de pixels codés en valeurs, chaque valeur correspondant à un type d'objet de la liste prédéfinie, le fichier image masque de segmentation sémantique étant de même dimension (R0) que le fichier image numérique initial (1).

**8.** Procédé selon la revendication 7, comprenant, en outre, une étape l) de superposition du fichier texte numérique (2) et du fichier image masque de segmentation sémantique (5), et une étape m) de classement consistant à assigner à chaque mot du fichier texte numérique (20) le type d'objet du rectangle du fichier image masque de segmentation sémantique (5) superposé audit mot.

**9.** Procédé selon la revendication 7, comprenant, en outre, une étape k) de post-traitement du fichier image masque de segmentation sémantique (5), cette étape comprenant un calcul de coordonnées de rectangle recouvrant des pixels adjacents de même valeur, et une génération d'un fichier image masque de segmentation sémantique post-traité (7), une étape l') de superposition du fichier texte numérique (2) et du fichier image masque de segmentation sémantique post-traité (7), et une étape m') de classement consistant à assigner à chaque mot du fichier texte numérique (2) le type d'objet du rectangle du fichier image masque de segmentation sémantique post-traité (7) superposé audit mot.

**10.** Dispositif électronique comprenant un moyen de capture d'une image d'un document de texte complexe à traiter et une unité centrale programmée pour comprendre un réseau neuronal selon l'une quelconque des revendications 1 à 6 et mettre en oeuvre le procédé selon l'une quelconque des revendications 7 à 9.

**11.** Dispositif selon la revendication 10, **caractérisé en ce qu'**il est choisi parmi un scanner, une imprimante, un photocopieur et un smartphone.

**Patentansprüche**

**1.** Multimodales neuronales Netzwerk (100), das durch ein Computersystem implementiert wird, umfassend eine vordefinierte Liste von Objekttypen zur semantischen Segmentierung eines zu verarbeitenden komplexen Textdokuments, **dadurch gekennzeichnet, dass** es umfasst:

   ◦ eine erste mehrschichtige neuronale Kette zum Codieren (10) einer ursprünglichen digitalen Bilddatei (1) des zu verarbeitenden Dokuments mit einer bestimmten ursprünglichen Größe (R0), wobei die erste neuronale Codierungskette (10) einen Eingang (11) zum Empfangen der ursprünglichen digitalen Bilddatei (1) des zu verarbeitenden Dokuments, eine Vielzahl von Berechnungsschichten (E(j)), die Dateien mit bestimmten Größen generieren, und einen Ausgang (12) aufweist,

   ◦ eine zweite mehrschichtige neuronale Kette zum Codieren (20) einer Maskenbilddatei (4) des zu verarbeitenden Dokuments mit einer bestimmten ursprünglichen Größe, die am Ende einer Segmentierungsoperation (3) generiert wird, die an einer Textdatei (2) durchgeführt wird, die durch Zeichenerkennung der ursprünglichen digitalen Bilddatei (1) des zu verarbeitenden Dokuments erhalten wird, wobei die Segmentierungsoperation (3) außerdem die Zuweisung eines in der vordefinierten Liste von Objekttypen ausgewählten Objekttyps zu jedem Wort der digitalen Textdatei und das Ersetzen jedes Worts durch eine Wertezone, die dem Typ des diesem Wort zugewiesenen Objekts entspricht, umfasst, wobei die zweite neuronale Codierungskette (20) einen Eingang (21), der die Maskenbilddatei (4) empfängt, eine Vielzahl von Berechnungsschichten (E'(j)), die Dateien mit bestimmten Größen generiert, und einen Ausgang (22) aufweist;

   ◦ eine mehrschichtige neuronale Decodierungskette (30), die mit dem Ausgang (12) der ersten mehrschichtigen neuronalen Codierungskette (10) und mit dem Ausgang (22) der zweiten mehrschichtigen neuronalen Codierungskette (20) verbunden ist und eine Vielzahl von Berechnungsschichten (D(j)) umfasst, die Dateien mit bestimmten Größen generieren;

   ◦ eine erste Brücke (40) aus parallelen Restverbindungen (CR40(k)) zwischen den Schichten (E(j)) der ersten mehrschichtigen neuronalen Codierungskette (10) und den Schichten (D(j)) der mehrschichtigen neuronalen Decodierungskette (30),

   ◦ eine zweite Brücke (50) aus parallelen Restverbindungen (CR50(k)) zwischen den Schichten (E'(j)) der zweiten mehrschichtigen neuronalen Codierungskette (20) und den Schichten (D(j)) der mehrschichtigen neuronalen Decodierungskette (30),

   wobei die parallelen Restverbindungen (CR40(k), CR50(k)) der ersten und der zweiten Brücke (40, 50) von Restverbindungen, die Dateien derselben Größe generieren, nach einer Schicht (D(j)) der mehrschichtigen neuronalen Decodierungskette (30) verbunden werden, die eine Maskenbilddatei für semantische Segmentierung (5) generiert, die aus Pixeln besteht, die in Werten codiert sind, wobei jeder Wert einem Objekttyp aus der vordefinierten Liste entspricht, wobei die Maskenbilddatei für semantische Segmentierung dieselbe Größe (R0) wie die ursprüngliche digitale Bilddatei (1) aufweist.

2.  Neuronales Netzwerk nach Anspruch 1, wobei:

◦ die erste mehrschichtige neuronale Codierungskette (10) mindestens N aufeinanderfolgende Codierungsberechnungsblöcke (E(j)) umfasst, die durch eine Hauptverbindung (13) miteinander verbunden sind, wobei N eine ganze Zahl zwischen 2 und 8 ist, wobei die Codierungsberechnungsblöcke von Rang 1 bis N-1 ferner jeweils eine Restverbindung (CR40(k)) für den Restdatenausgang umfassen, wobei jeder der N Codierungsberechnungsblöcke mindestens eine Faltung und mindestens eine Unterabtastungsoperation ausführt, so dass:

- wenn der Rang-1-Codierungsberechnungsblock (E(1)) eine Datei einer bestimmten ursprünglichen Größe (R0) empfängt, er eine Datei der Größe von Rang 1 generiert, die kleiner als die bestimmte ursprüngliche Größe (R0) ist; und
- wenn ein Rang-i-Codierungsberechnungsblock (E(i)), wobei i eine ganze Zahl zwischen 2 und N ist, über die Hauptverbindung (13) mit dem Codierungsberechnungsblock des vorherigen Rangs i-1 (E(i-1)) eine Datei der Größe des vorherigen Rangs i-1 empfängt, er eine Datei von Rang i mit einer Größe des Rangs i generiert, die kleiner ist als die Größe des vorherigen Rangs i-1 der Datei, die von dem Codierungsberechnungsblock des vorherigen Rangs i-1 empfangen wurde;

◦ die zweite mehrschichtige neuronale Codierungskette (20), parallel zur ersten mehrschichtigen neuronalen Codierungskette (10), die gleiche Anzahl N aufeinanderfolgender Codierungsberechnungsblöcke (E'(j)) umfasst wie die erste mehrschichtige neuronale Codierungskette Codierungsberechnungsblöcke (E(j)) umfasst, wobei die N aufeinanderfolgenden Codierungsberechnungsblöcke (E'(j)) der zweiten mehrschichtigen neuronalen Codierungskette (20) durch eine Hauptverbindung (23) miteinander verbunden sind, wobei die Codierungsberechnungsblöcke von Rang 1 bis N-1 ferner jeweils eine Restverbindung (CR50(k)) für den Restdatenausgang umfassen, wobei jeder der N Codierungsberechnungsblöcke mindestens eine Faltung und mindestens eine Unterabtastungsoperation ausführt, so dass:

- der Rang-1-Codierungsberechnungsblock (E'(1)) eine Datei der bestimmten ursprünglichen Größe (R0) empfängt und eine Datei der Größe von Rang 1 generiert, die kleiner als die bestimmte ursprüngliche Größe (R0) ist; und
- ein Rang-i-Codierungsberechnungsblock (E'(i)), wobei i eine ganze Zahl zwischen 2 und N ist, über die Hauptverbindung (23) mit dem Codierungsberechnungsblock des vorherigen Rangs i-1 (E'(i-1)) eine Datei der Größe des vorherigen Rangs i-1 empfängt und eine Datei von Rang i einer Größe des Rangs i generiert, die kleiner ist als die Größe des vorherigen Rangs i-1 der Datei, die von dem Codierungsberechnungsblock des vorherigen Rangs i-1 empfangen wurde; und wobei

◦ die mehrschichtige neuronale Decodierungskette (30) die gleiche Anzahl N aufeinanderfolgender Decodierungsberechnungsblöcke (D(i)) umfasst wie die erste mehrschichtige neuronale Codierungskette Codierungsberechnungsblöcke umfasst, wobei die N Decodierungsberechnungsblöcke durch eine Hauptverbindung (33) miteinander verbunden sind, wobei jeder Decodierungsberechnungsblock (D(i)) einen Zusammenführungsunterblock (df(i)) umfasst, der mindestens eine Zusammenführung von Dateien mit identischen Größen durchführt, gefolgt von einem Entfaltungsunterblock (dd(i)), der mindestens eine Entfaltung der durch den Zusammenführungsunterblock (df(i)) zusammengeführten Dateien durchführt, wobei die Decodierungsberechnungsblöcke (D(i)) mit den Codierungsberechnungsblöcken (E(i), E'(i)) der ersten und der zweiten mehrschichtigen neuronalen Codierungsketten (10, 20) verbunden sind, so dass:

- der Zusammenführungsunterblock (df(1)) des Rang-1-Decodierungsberechnungsblocks die von den Rang-N-Codierungsberechnungsblöcken (E(N)-E'(N)) der ersten und der zweiten mehrschichtigen neuronalen Codierungskette (10-20) generierten Dateien empfängt;
- der Zusammenführungsunterblock des Rang-i-Decodierungsberechnungsblocks (df(i)), wobei i zwischen 2 und N liegt, die vom Entfaltungsunterblock (dd(i-1)) des Rang i-1-Decodierungsberechnungsblocks (D(i-1) generierten Dateien sowie Restdaten, die von der Restausgangsverbindung des Rang N-(i-1)-Codierungsberechnungsblocks (E(N-(i-1)), E'(N-(i-1))) der ersten und der zweiten mehrschichtigen neuronalen Codierungskette (10-20) stammen, empfängt.

3. Neuronales Netzwerk nach Anspruch 2, wobei die erste und die zweite mehrschichtige neuronale Codierungskette (10-20) jeweils einen ersten (E(1), E'(1)) und einen zweiten (E(2), E'(2)) Codierungsberechnungsblock umfassen, von denen jeder zwei Faltungen und eine Unterabtastungsoperation durchführt, sowie einen dritten (E(3), E'(3)) und einen vierten (E(4), E'(4)) Codierungsberechnungsblock, von denen jeder drei Faltungen und eine Unterabtastungsoperation durchführt.

4. Neuronales Netzwerk nach Anspruch 2, wobei die mehrschichtige neuronale Decodierungskette einen ersten (D(1), einen zweiten (D(2)) und einen dritten (D(3)) Decodierungsberechnungsblock umfasst, der jeweils mit einem Entfaltungsunterblock (dd(1), dd(2), dd(3)) versehen ist, der eine Entfaltung durchführt, sowie einen vierten (D(4)) Decodierungsberechnungsblock, der mit einem Entfaltungsunterblock (dd(4)) versehen ist, der eine Entfaltung und eine Maximalargument-Operation durchführt.

5. Neuronales Netzwerk nach Anspruch 2 oder 3, wobei:

○ die erste mehrschichtige neuronale Codierungskette (10) am Ausgang des Rang-N-Codierungsberechnungsblocks (E(N)) eine Restverbindung (CR40(N)) für den Restdatenausgang und eine Hauptverbindung (13) mit einem abschließenden globalen Rang-N+1-Codierungsberechnungsblock (S) umfasst, umfassend einen ersten und einen zweiten Unterblock (S1, S2), die jeweils drei Faltungen und eine Unterabtastungsoperation durchführen, einen dritten (S3) und einen vierten (S4) Codierungsberechnungsunterblock, der jeweils eine Faltung durchführt, gefolgt von einer Gleichrichtungsoperation, gefolgt von einer Abbruchoperation, einen fünften Unterblock (S5), der eine Faltung durchführt, und einen sechsten Unterblock (S6), der eine Entfaltung durchführt, derart, dass eine Datei, die aus dem sechsten Block (S6) hervorgeht, eine Größe aufweist, die mit der Größe einer Datei identisch ist, die aus dem Rang-N-Codierungsberechnungsblock (E(N)) hervorgeht, und wobei
○ der Zusammenführungsunterblock (df(1)) des Rang-1-Decodierungsberechnungsblocks (D(1)) der mehrschichtigen neuronalen Decodierungskette (30) die vom globalen Rang-N+1-Codierungsberechnungsblock (S) generierten Dateien der ersten mehrschichtigen neuronalen Codierungskette (10), Restdaten, die von der Restverbindung (CR40(N)) des Ausgangs des Rang-N-Codierungsberechnungsblocks (E(N)) der ersten mehrschichtigen neuronalen Codierungskette (10) stammen, und die vom Rang-N-Codierungsberechnungsblock (E'(N)) der zweiten mehrschichtigen neuronalen Codierungskette (20) generierten Dateien empfängt.

6. Neuronales Netzwerk nach einem der Ansprüche 1 bis 5, wobei die erste und die zweite mehrschichtige neuronale Codierungskette (10, 20) eine neuronale Faltungs-Netzwerkarchitektur aufweist, die aus VGG16-Netzwerken und RESNet-Netzwerken ausgewählt wird.

7. Verfahren zur semantischen Segmentierung eines zu verarbeitenden komplexen Textdokuments, das durch ein Computersystem implementiert wird, das eine vordefinierte Liste von Objekttypen umfasst, **dadurch gekennzeichnet, dass** es die folgenden Schritte umfasst:

a) Erhalten einer ursprünglichen digitalen Bilddatei (1) des zu verarbeitenden komplexen Textdokuments, wobei die ursprüngliche digitale Bilddatei (1) eine bestimmte ursprüngliche Größe (R0) aufweist;
b) Umsetzen einer optischen Zeichenerkennung der ursprünglichen digitalen Bilddatei (1), um eine digitale Textdatei (2) zu erhalten;
c) Bereitstellen einer vordefinierten Liste von Objekttypen und Durchführen einer Segmentierungsoperation, um jedem Wort der digitalen Textdatei einen aus der vordefinierten Liste von Objekttypen ausgewählten Objekttyp zuzuweisen,
d) Generieren einer Maskenbilddatei (4), die in Werten codiert ist, indem jedes Wort durch eine Wertezone ersetzt wird, die dem Typ des diesem Wort zugewiesenen Objekts entspricht, wobei die Maskenbilddatei die gleiche bestimmte ursprüngliche Größe (R0) aufweist wie die ursprüngliche digitale Bilddatei (1);
e) Bereitstellen einer ersten mehrschichtigen neuronalen Codierungskette (10), die mindestens N aufeinanderfolgende Codierungsberechnungsblöcke (E(N)) umfasst, die durch eine Hauptverbindung (13) miteinander verbunden sind, wobei N eine ganze Zahl zwischen 2 und 8 ist, wobei die Codierungsberechnungsblöcke von Rang 1 bis N-1 jeweils eine Restverbindung (CR40(k)) für den Restdatenausgang umfassen, wobei jeder der N Codierungsberechnungsblöcke (E(N)) mindestens eine Faltung und mindestens eine Unterabtastungsoperation ausführt, so dass:

- der Rang-1-Codierungsberechnungsblock (E(1)) eine Datei der bestimmten ursprünglichen Größe (R0) empfängt und eine Datei der Größe von Rang 1 generiert, die kleiner als die bestimmte ursprüngliche Größe (R0) ist; und

- ein Rang-i-Codierungsberechnungsblock (E(i)), wobei i eine ganze Zahl zwischen 2 und N ist, über die Hauptverbindung (13) mit dem Codierungsberechnungsblock (E(i-1)) des vorherigen Rangs i-1 eine Datei der Größe des vorherigen Rangs i-1 empfängt und eine Datei von Rang i mit einer Größe des Rangs i generiert, die kleiner ist als die Größe des vorherigen Rangs i-1 der aus dem Codierungsberechnungsblock des vorherigen Rangs i-1 empfangenen Datei;

f) Bereitstellen einer zweiten mehrschichtigen neuronalen Codierungskette (20) parallel zur ersten mehrschichtigen neuronalen Codierungskette (10) und mit der gleichen Anzahl N aufeinanderfolgender Codierungsberechnungsblöcke (E'(i)) wie die erste mehrschichtige neuronale Codierungskette (10), wobei die N aufeinanderfolgenden Codierungsberechnungsblöcke (E'(i)) der zweiten mehrschichtigen neuronalen Codierungskette (20) durch eine Hauptverbindung (23) miteinander verbunden sind, wobei die Codierungsberechnungsblöcke von Rang 1 bis N-1 jeweils eine Restverbindung (CR50(k)) für den Restdatenausgang umfassen, wobei jeder der N Codierungsberechnungsblöcke mindestens eine Faltung und mindestens eine Unterabtastungsoperation ausführt, so dass:

- der Rang-1-Codierungsberechnungsblock (E'(1)) eine Datei der bestimmten ursprünglichen Größe (R0) empfängt und eine Datei der Größe von Rang 1 generiert, die kleiner als die bestimmte ursprüngliche Größe (R0) ist; und
- ein Rang-i-Codierungsberechnungsblock (E'(i)), wobei i eine ganze Zahl zwischen 2 und N ist, über die Hauptverbindung mit dem Codierungsberechnungsblock des vorherigen Rangs i-1 eine Datei der Größe des vorherigen Rangs i-1 empfängt und eine Datei des Rangs i mit einer Größe von Rang i generiert, die kleiner ist als die Größe des vorherigen Rangs i-1 der Datei, die vom Codierungsberechnungsblock des vorherigen Rangs i-1 empfangen wurde;

g) Bereitstellen einer mehrschichtigen neuronalen Decodierungskette (30), die die gleiche Anzahl N aufeinanderfolgender Decodierungsberechnungsblöcke (D(i)) umfasst wie die erste mehrschichtige neuronale Codierungskette (10) Codierungsberechnungsblöcke umfasst, wobei die Decodierungsberechnungsblöcke jeweils durch eine Hauptverbindung (33) miteinander verbunden sind, wobei jeder Decodierungsberechnungsblock (D(i)) einen Zusammenführungsunterblock (df(i)) umfasst, der mindestens eine Zusammenführung von Dateien identischer Größen durchführt, gefolgt von einem Entfaltungsunterblock (dd(i)), der mindestens eine Entfaltung der durch den Zusammenführungsunterblock zusammengeführten Dateien durchführt, wobei die Decodierungsberechnungsblöcke (D(i)) mit den Codierungsberechnungsblöcken (E(i), E'(i)) der ersten und der zweiten mehrschichtigen neuronalen Codierungsketten (10, 20) verbunden sind, so dass:

- der Zusammenführungsunterblock (df(1)) des Rang-1-Decodierungsberechnungsblocks (D(1)) die von den Rang-N-Codierungsberechnungsblöcken (E(N)-E'(N)) der ersten und der zweiten mehrschichtigen neuronalen Codierungskette generierten Dateien empfängt;
- der Zusammenführungsunterblock (df(i)) des Rang-i-Decodierungsberechnungsblocks, wobei i zwischen 2 und N liegt, die vom Entfaltungsunterblock (D(i-1)) des Rang i-1-Decodierungsberechnungsblocks generierten Dateien, sowie Restdaten, die von der Restausgangsverbindung (CR40(N-(i-1)), CR50(N-i-1))) des Rang N-(i-1)-Codierungsberechnungsblocks der ersten und zweiten mehrschichtigen neuronalen Codierungskette stammen, empfängt

h) Codieren der ursprünglichen digitalen Bilddatei (1) in der ersten mehrschichtigen neuronalen Codierungskette (10);

i) Codieren der Maskenbilddatei (4) in der zweiten mehrschichtigen neuronalen Codierungskette (20);

j) wobei der Rang-N-Entfaltungsunterblock (dd(N)) eine Maskenbilddatei für semantische Segmentierung (5) generiert, die aus Pixeln besteht, die in Werten codiert sind, wobei jeder Wert einem Objekttyp aus der vordefinierten Liste entspricht, wobei die Maskenbilddatei für semantische Segmentierung dieselbe Größe (R0) aufweist wie die ursprüngliche digitale Bilddatei (1).

8. Verfahren nach Anspruch 7, ferner umfassend einen Schritt I) des Überlagerns der digitalen Textdatei (2) und der Maskenbilddatei für semantische Segmentierung (5) und einen Klassifizierungsschritt m), der darin besteht, jedem Wort der digitalen Textdatei (20) den Objekttyp des Rechtecks der Maskenbilddatei für semantische Segmentierung (5) zuzuweisen, das dem Wort überlagert ist.

**9.** Verfahren nach Anspruch 7, ferner umfassend einen Schritt k) der Nachverarbeitung der Maskenbilddatei für semantische Segmentierung (5), wobei dieser Schritt eine Berechnung von Rechteckkoordinaten umfasst, die benachbarte Pixel mit demselben Wert abdecken, und eine Generierung einer nachverarbeiteten Maskenbilddatei für semantische Segmentierung (7), einen Schritt I') zum Überlagern der digitalen Textdatei (2) und der nachverarbeiteten Maskenbilddatei für semantische Segmentierung (7), und einen Klassifizierungsschritt m'), der darin besteht, jedem Wort der digitalen Textdatei (2) den Objekttyp des Rechtecks der nachverarbeiteten Maskenbilddatei für semantische Segmentierung (7) zuzuweisen, das dem Wort überlagert ist.

**10.** Elektronische Vorrichtung, umfassend Mittel zum Aufnehmen eines Bildes eines zu verarbeitenden komplexen Textdokuments, und eine Zentraleinheit, die so programmiert ist, dass sie ein neuronales Netzwerk nach einem der Ansprüche 1 bis 6 umfasst und das Verfahren nach einem der Ansprüche 7 bis 9 implementiert.

**11.** Vorrichtung nach Anspruch 10, **dadurch gekennzeichnet, dass** sie aus einem Scanner, einem Drucker, einem Fotokopierer und einem Smartphone ausgewählt wird.

**Claims**

**1.** A multimodal neural network (100) implemented by a computer system comprising a predefined list of object types, for semantic segmentation of a complex text document to be processed, **characterized in that** it comprises:

○ a first multilayer neural chain (10) for encoding an initial digital image file (1) of the document to be processed, with a determined initial dimension (R0), the first encoding neural chain (10) having an input (11) receiving the initial digital image file (1) of the document to be processed, a plurality of calculation layers (E(j)) generating files with determined dimensions, and an output (12),
○ a second multilayer neural chain (20) for encoding a mask image file (4) of the document to be processed, with a determined initial dimension, generated at the end of a segmentation operation (3) performed on a text file (2) obtained by character recognition of the initial digital image file (1) of the document to be processed, the segmentation operation (3) further comprising the assignment to each word of the digital text file of an object type chosen from the predefined list of object types and the replacement of each word by a value field corresponding to the object type assigned to said word, the second encoding neural chain (20) having an input (21) receiving the mask image file (4), a plurality of calculation layers (E'(j)) generating files with determined dimensions, and an output (22);
○ a decoding multilayer neural chain (30) connected to the output (12) of the first encoding multilayer neural chain (10) and to the output (22) of the second encoding multilayer neural chain (20), and comprising a plurality of calculation layers (D(j)) generating files with determined dimensions;
○ a first bridge (40) of parallel residual connections (CR40(k)) between the layers (E(j)) of the first encoding multilayer neural chain (10) and the layers (D(j)) of the decoding multilayer neural chain (30),
○ a second bridge (50) of parallel residual connections (CR50(k)) between the layers (E'(j)) of the second encoding multilayer neural chain (20) and the layers (D(j)) of the decoding multilayer neural chain (30),
the parallel residual connections (CR40(k), CR50(k)) of the first and second bridges (40, 50) of residual connections generating files of the same size being connected after a layer (D(j)) of the decoding multilayer neural chain (30) generating a semantic segmentation mask image file (5) consisting of value-coded pixels, each value corresponding to an object type from the predefined list, the semantic segmentation mask image file being of the same dimension (R0) as the initial digital image file (1).

**2.** The neural network according to claim 1, wherein:

○ the first encoding multilayer neural chain (10) comprises at least N successive encoding computation blocks (E(j)) linked together by a main connection (13), N being an integer between 2 and 8, the encoding computation blocks of rank 1 to N-1 each further comprising a residual connection (CR40(k)) outputting residual data, each of the N encoding computation blocks performing at least one convolution and at least one subsampling operation, such that:

- when the rank 1 encoding calculation block (E(1)) receives a file with a determined initial dimension (R0), it generates a file with a rank 1 dimension smaller than the determined initial dimension (R0); and that
- when an encoding calculation block of rank i (E(i)), i being an integer between 2 and N, receives via the main connection (13) with the encoding calculation block of previous rank i-1 (E(i-1)), a file of dimension of previous rank i-1, it generates a file of rank i with a dimension of rank i less than the dimension of previous rank i-1 of the file received from the encoding calculation block of previous rank i-1;

◦ the second encoding multilayer neural chain (20), parallel to the first encoding multilayer neural chain (10), comprises the same number N of successive encoding calculation blocks (E'(j)) as the first encoding multilayer neural chain comprises encoding calculation blocks (E(j)), the N successive encoding calculation blocks (E'(j)) of the second encoding multilayer neural chain (20) being linked together by a main connection (23), the encoding calculation blocks of rank 1 to N-1 each further comprising a residual connection (CR50(k)) outputting residual data, each of the N encoding calculation blocks executing at least one convolution and at least one subsampling operation, such that:

- the rank 1 encoding calculation block (E'(1)) receives a file with a determined initial dimension (R0), and generates a file with a rank 1 dimension smaller than the determined initial dimension (R0); and
- an encoding calculation block of rank i (E(i)), i being an integer between 2 and N, receives via the main connection (23) with the encoding calculation block of previous rank i-1 (E(i-1)), a file of dimension of previous rank i-1, and generates a file of rank i with a dimension of rank i less than the dimension of previous rank i-1 of the file received from the encoding calculation block of previous rank i-1; and wherein

◦ the decoding multilayer neural chain (30) comprises the same number N of successive decoding computation blocks (D(i)) as the first encoding multilayer neural chain comprises encoding computation blocks, the N decoding computation blocks being linked together by a main connection (33), each decoding computation block (D(i)) comprising a merger sub-block (df(i)) performing at least one merger of files of identical dimensions, followed by a deconvolution sub-block (dd(i)) performing at least one deconvolution of the files merged by the merger sub-block (df(i)), the decoding calculation blocks (D(i)) being connected to the encoding calculation blocks (E(i), E'(i)) of the first and second encoding multilayer neural chains (10, 20) in such a way that:

- the merger sub-block (df(1)) of the decoding calculation block of rank 1 receives the files generated by the encoding calculation blocks (E(N)-E'(N)) of rank N of the first and second encoding multilayer neural chains (10-20);
- the merger sub-block of the decoding calculation block (df(i)) of rank i, for i between 2 and N, receives the files generated by the deconvolution sub-block (dd(i-1)) of the decoding calculation block (D(i-1)) of rank i-1, as well as residual data from the residual output connection of the encoding calculation block (E(N-(i-1)), E'(N-(i-1))) of rank N-(i-1) of the first and second encoding multilayer neural chains (10-20).

3. The neural network of claim 2, wherein the first and second encoding multilayer neural chains (10-20) each comprise a first (E(1), E'(1)) and a second (E(2), E'(2)) encoding calculation block each performing two convolutions and one subsampling operation, and a third (E(3), E'(3)) and a fourth (E(4), E'(4)) encoding calculation block each performing three convolutions and one subsampling operation.

4. The neural network according to claim 2, wherein the decoding multilayer neural chain comprises a first (D(1)), a second (D(2)) and a third (D(3)) decoding computing block each provided with a deconvolution sub-block (dd(1), dd(2), dd(3)) performing a deconvolution, and a fourth (D(4)) decoding calculation block with a deconvolution sub-block (dd(4)) performing a deconvolution and a maximum argument operation.

5. The neural network according to claim 2 or 3, wherein:

◦ the first encoding multilayer neural chain (10) comprises, at the output of the Nth-rank encoding calculation block (E(N)), a residual connection (CR40(N)) outputting residual data and a main connection (13) with a final global encoding calculation block (S), of rank N+1, comprising a first and a second sub-block (S1, S2) each performing three convolutions and one subsampling operation, a third (S3) and a fourth (S4) encoding calculation sub-block each performing a convolution, followed by a rectification operation, followed by an abort operation, a fifth sub-block (S5) performing a convolution, and a sixth sub-block (S6) performing a deconvolution such that a file that is output from the sixth block (S6) has a dimension identical to the dimension of a file that is output from the Nth-rank encoding calculation block (E(N)), and wherein
◦ the merger sub-block (df(1)) of the decoding calculation block (D(1)) of rank 1 of the multilayer neural decoding chain (30) receives the files generated by the global encoding calculation block (S) of rank N+1 of the first encoding multilayer neural chain (10), residual data from the residual output connection (CR40(N)) of the Nth-rank encoding calculation block (E(N)) of the first encoding multilayer neural chain (10), and the files generated by the Nth-rank encoding calculation block (E'(N)) of the second encoding multilayer neural chain (20).

6. The neural network according to any one of claims 1 to 5, wherein the first and second encoding multilayer neural chains (10, 20) are of a convolutional neural network architecture selected from VGG16 and RESNet networks.

7. A method for semantic segmentation of a complex text document to be processed, implemented by a computer system comprising a predefined list of object types,
**characterized in that** it comprises the following steps:

a) obtaining an initial digital image file (1) of the complex text document to be processed, the initial digital image file (1) having a specific initial dimension (R0);
b) performing optical character recognition on the original digital image file (1) to obtain a digital text file (2);
c) providing a predefined list of object types and performing a segmentation operation to assign to each word in the digital text file an object type chosen from the predefined list of object types,
d) generating a mask image file (4), value-coded by replacing each word with a value field corresponding to the object type assigned to said word, the mask image file being of the same determined initial size (R0) as the initial digital image file (1);
e) providing a first encoding multilayer neural chain (10) comprising at least N successive encoding computation blocks (E(N)) linked together by a main connection (13), N being an integer between 2 and 8, the encoding computation blocks of rank 1 to N-1 each comprising a residual connection (CR40(k)) outputting residual data, each of the N encoding computation blocks (E(N)) performing at least one convolution and at least one subsampling operation, such that:

- the rank 1 encoding calculation block (E(1)) receives a file with a determined initial dimension (R0), and generates a file with a rank 1 dimension smaller than the determined initial dimension (R0); and
- an encoding calculation block (E(i)) of rank i, i being an integer between 2 and N, receives via the main connection (13) with the encoding calculation block (E(i-1)) of previous rank i-1, a file of dimension of previous rank i-1 and generates a file of rank i with a dimension of rank i less than the dimension of previous rank i-1 of the file received from the encoding calculation block of previous rank i-1;

f) providing a second encoding multilayer neural chain (20), parallel to the first encoding multilayer neural chain (10) and comprising the same number N of successive encoding calculation blocks (E'(i)) as the first encoding multilayer neural chain (10), the N successive encoding calculation blocks (E'(i)) of the second encoding multilayer neural chain (20) being linked together by a main connection (23), the encoding calculation blocks of rank 1 to N-1 each comprising a residual connection outputting residual data (CR50(k)), each of the N encoding calculation blocks executing at least one convolution and at least one subsampling operation, such that:

- the rank 1 encoding calculation block (E'(1)) receives a file with a determined initial dimension (R0), and generates a file with a rank 1 dimension smaller than the determined initial dimension (R0); and
- an encoding calculation block (E(i)) of rank i, i being an integer between 2 and N, receives via the main connection with the encoding calculation block of previous rank i-1, a file of dimension of previous rank i-1 and generates a file of rank i with a dimension of rank i less than the dimension of previous rank i-1 of the file received from the encoding calculation block of previous rank i-1;

g) providing a decoding multilayer neural chain (30) comprising the same number N of successive decoding computation blocks (D(i)) as the first encoding multilayer neural chain (10) comprises encoding computation blocks, each decoding computation block being linked together by a main connection (33), each decoding computation block (D(i)) comprising a merger sub-block (df(i)) performing at least one merger of files of identical dimensions, followed by a deconvolution sub-block (dd(i)) performing at least one deconvolution of the files merged by the merger sub-block, the decoding calculation blocks (D(i)) being connected to the encoding calculation blocks (E(i), E'(i)) of the first and second encoding multilayer neural chains (10, 20) in such a way that:

- the merger sub-block (df(1)) of the decoding calculation block (D(1)) of rank 1 receives the files generated by the encoding calculation blocks (E(N)-E'(N)) of rank N of the first and second encoding multilayer neural chains;
- the merger sub-block (df(1)) of the decoding calculation block of rank i, for i between 2 and N, receives the files generated by the deconvolution sub-block (D(i-1)) of the decoding calculation block of rank i-1, as well as residual data from the residual output connection (CR40(N-(i-1)), CR50(N-i-1))) of the encoding calculation block of rank N-(i-1) of the first and second encoding multilayer neural chains

> h) encoding the initial digital image file (1) in the first encoding multilayer neural chain (10);
> i) encoding the mask image file (4) in the second encoding multilayer neural chain (20);
> j) the deconvolution sub-block (dd(N)) of rank N generates a semantic segmentation mask image file (5) made up of value-coded pixels, each value corresponding to an object type from the predefined list, the semantic segmentation mask image file having the same dimension (R0) as the initial digital image file (1).

8. The method according to claim 7, further comprising a step l) of superimposing the digital text file (2) and the semantic segmentation mask image file (5), and a classification step m) consisting in assigning to each word of the digital text file (20) the object type of the rectangle of the semantic segmentation mask image file (5) superimposed on said word.

9. The method according to claim 7, further comprising a step k) of post-processing the semantic segmentation mask image file (5), this step comprising a calculation of rectangle coordinates overlapping adjacent pixels of the same value, and a generation of a post-processed semantic segmentation mask image file (7), a step l') of superimposing the digital text file (2) and the post-processed semantic segmentation mask image file (7), and a classification step m') consisting in assigning to each word of the digital text file (2) the object type of the rectangle of the post-processed semantic segmentation mask image file (7) superimposed on said word.

10. An electronic device comprising means for capturing an image of a complex text document to be processed and a central processing unit programmed to comprise a neural network according to any one of claims 1 to 6 and to implement the method according to any one of claims 7 to 9.

11. The device according to claim 10, **characterized in that** it is selected from a scanner, a printer, a photocopier and a smartphone.

[Fig. 1]

[Fig. 2]                                          [Fig. 3]

[Fig. 6]

[Fig. 4]

[Fig. 5]

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MARTÍNEK JIRÍ et al.** Building an efficient OCR system for historical documents with little training data. *NEURAL COMPUTING AND APPLICATIONS,* 09 Mai 2020, vol. 32 (23), 17209-17227

- **DE STEFAN KLINK ; ANDREAS DENGEL ; THOMAS KIENINGER.** Document Structure Analysis Based on Layout and Textual Features. *Computer science,* 2000